# EUROPEAN PATENT SPECIFICATION

(11) **EP 4 256 889 B1**
(45) Date of publication and mention of the grant of the patent: **27.11.2024**
(21) Application number: 21704485.8
(22) Date of filing: 09.02.2021
(51) Int. Cl.: H04W 76/12, H04W 28/06

(54) **DEVICES, SYSTEMS AND METHODS FOR URLLC IN A 5G COMMUNICATION NETWORK**
GERÄTE, SYSTEME UND VERFAHREN FÜR URLLC IN EINEM 5G KOMMUNIKATIONSNETZWERK
APPAREILS, SYSTÈMES ET PROCÉDÉS POUR URLCC DANS UN RÉSEAU DE COMMUNICATION 5G

(43) Date of publication of application: 11.10.2023
(73) Proprietor: Huawei Technologies Co., Ltd., Shenzhen, Guangdong 518129 (CN)
(72) Inventor: LIU, Longxin, 16440 Kista (SE); NI, Shaoji, 16440 Kista (SE)
(74) Representative: Isarpatent
(86) International application number: PCT/EP2021/052992
(87) International publication number: WO 2022/171261

(56) References cited:
- EP-A1- 3 806 534
- US-A1- 2018 310 202
- US-A1- 2020 084 682
- US-A1- 2020 205 034
- US-B1- 10 588 052

## Description

### TECHNICAL FIELD

The present disclosure relates to telecommunication. More specifically, the present disclosure relates to a network entity, a communication network, a method, and a computer program product for improved ultra-reliable low latency communication (URLLC) in a 5G communication network.

### BACKGROUND

With the advent of the fourth industrial revolution, the demand for the mobility by cyber-physical applications of vertical industries, such as smart industrial manufacturing, industrial robot control, smart autonomous driving control, smart energy, telemedicine, and the like, is getting more and more urgent. As a result, 5G communication systems need to play an irreplaceable role in the technology development of vertical industries since a 5G communication network can provide mobility and flexibility to applications of vertical industries. Different applications may have different requirements for 5G communications. Typically, ultra-reliable low latency communication (URLLC) is required for those cyber-physical applications which have periodic deterministic communications between their central servers for controlling real time machine production and controlled application clients (also referred to as APPs). The communication service availability highly depends on the latency and reliability of the logical communication link, as well as the survival time of a communication message defined by a cyber-physical application. If the latency of a message is not within the range of the survival time, the received message is considered "not available".

According to the specification 3GPP TS 22.104, periodic deterministic communications of a cyber-physical application for a 5G system should meet the following requirements. Firstly, the message packets of each application must arrive at the scheduled time. The system is considered unavailable if an expected message is not received within a specified time. Secondly, ultra-availability requirements for the communication service of provided by a 5G system demand a service availability of at least 99.9999%. Thirdly, very strict failure recovery time from a few milliseconds to 100 milliseconds. However, such requirements of ultra-reliable low latency communication (URLLC) provide a great challenge for a 5G communication system. The patent application US 2018/310202 shows a network in which data is sent to the UE through two different bearers and a packet duplication function is used to split the data into the two bearers.

### SUMMARY

The present disclosure provides a network entity, a communication network, a method, and a computer program product, as defined in the appended set of claims, for improved ultra-reliable low latency communication in a 5G communication network.

According to a first aspect a network entity for providing redundant data paths for communication of data between a user equipment, UE, and at least one user plane function, UPF, of a core network in a communication network, in particular a 5G communication network is provided. The network entity may be implemented in software and/or hardware in the communication network. The network entity may comprise, for instance, one or more network functions and/or one or more physical network devices.

The network entity is configured to establish a first packet data unit, PDU session for the UE using a primary next generation radio access network, NG-RAN, implementing a first protocol stack, wherein the first protocol stack of the primary NG-RAN includes at least one first GPRS tunnelling protocol user plane, GTP-U, entity and a first service data adaption protocol, SDAP, entity. The establishment of the first PDU session includes establishing at least one first GTP-U tunnel between a core network of the communication network and the primary NG-RAN. The network entity is further configured to establish a second PDU session for the UE using a secondary NG-RAN implementing a second protocol stack, wherein the second protocol stack of the secondary NG-RAN includes at least one second GTP-U entity and a second SDAP entity, wherein the establishment of the second PDU session includes establishing at least one second GTP-U tunnel between the core network (of the communication network and the secondary NG-RAN.

The network entity provides a first packet duplication and elimination, PDE, entity in the first GTP-U entity and/or the first SDAP entity of the primary NG-RAN and a second PDE entity in the second GTP-U entity and/or the second SDAP entity of the secondary NG-RAN. The first PDE entity is configured to:
(a) obtain a first downlink Ethernet frame or DetNet-IP packet from the first GTP-U entity;
(b) generate a first downlink service data unit, SDU, wherein the first downlink SDU comprises the first downlink Ethernet frame or DetNet-IP packet;
(c) generate a first downlink packet data unit, PDU, based on the first downlink SDU, wherein the first downlink PDU comprises the first downlink Ethernet frame or DetNet-IP packet for providing the first downlink PDU to the first SDAP entity or a first packet data convergence protocol, PDCP, entity of the primary NG-RAN; and
(d) provide a copy of the first downlink SDU to the first GTP-U entity or a further first GTP-U entity of the primary NG-RAN for forwarding the copy of the first downlink SDU to the secondary NG-RAN.

In a further possible implementation form of the first aspect, the first GTP-U entity is configured to extract the first downlink Ethernet frame or DetNet-IP packet from the payload of a first GPRS tunnelling protocol packet data unit, GTP PDU received by the primary NG-RAN through the first GTP-U tunnel for obtaining the first downlink Ethernet frame or DetNet-IP packet by the first PDE entity.

In a further possible implementation form of the first aspect, the network entity is configured to further establish at least one further GTP-U tunnel between the first GTP-U entity or the further first GTP-U entity of the primary NG-RAN and the second GTP-U entity or a further second GTP-U entity of the secondary NG-RAN for communicating user data related to the UE, wherein the first GTP-U entity or the further first GTP-U entity is configured to generate a GTP-U PDU based on the copy of the first downlink SDU for forwarding the GTP-U PDU to the second GTP-U entity or the further second GTP-U entity of the secondary NG-RAN through the at least one further GTP-U tunnel.

In a further possible implementation form of the first aspect, the first PDE entity of the primary NG-RAN is further configured to:
(a) obtain a first uplink Ethernet frame or DetNet-IP packet from the first PDCP entity;
(b) generate a first uplink service data unit, SDU, wherein the first uplink SDU comprises the first uplink Ethernet frame or DetNet-IP packet;
(c) generate a first uplink packet data unit, PDU, based on the first uplink SDU, wherein the first uplink PDU comprises the first uplink Ethernet frame or DetNet-IP packet for providing the first uplink PDU to the first GTP-U entity for generating a GTP-U PDU to send to the core network of the communication network via the first GTP-U tunnel; and
(d) provide a copy of the first uplink SDU to the first GTP-U entity or the further first GTP-U entity for forwarding the copy of the first uplink SDU to the secondary NG-RAN via the at least one further GTP-U tunnel.

In a further possible implementation form of the first aspect, the first PDE entity is further configured to provide the copy of the first downlink SDU or the copy of the first uplink SDU to the first GTP-U entity or the further first GTP-U entity together with information indicative of whether the respective Ethernet frame or DetNet-IP packet is intended for the UE or the core network of the communication network.

In a further possible implementation form of the first aspect, the second PDE entity of the secondary NG-RAN is configured to:
(a) obtain a second downlink Ethernet frame or DetNet-IP packet from the second GTP-U entity;
(b) generate a second downlink service data unit, SDU, wherein the second downlink SDU comprises the second downlink Ethernet frame or DetNet-IP packet;
(c) generate a second downlink packet data unit, PDU, based on the second downlink SDU, wherein the second downlink PDU comprises the second downlink Ethernet frame or DetNet-IP packet for providing the second downlink PDU to the second SDAP entity or a second packet data convergence protocol, PDCP, entity of the secondary NG-RAN; and
(d) provide a copy of the second downlink SDU to the second GTP-U entity or a further second GTP-U entity for forwarding the copy of the second downlink SDU to the primary NG-RAN via the further GTP-U tunnel.

In a further possible implementation form of the first aspect, the second PDE entity of the secondary NG-RAN is further configured to:
(a) obtain a second uplink Ethernet frame or DetNet-IP packet from the second PDCP entity;
(b) generate a second uplink service data unit, SDU, wherein the second uplink SDU comprises the second uplink Ethernet frame or IP packet;
(c) generate a second uplink packet data unit, PDU, based on the second uplink SDU, wherein the second uplink PDU comprises the second uplink Ethernet frame or DetNet-IP packet for providing the second uplink PDU to the second GTP-U entity for generating a GTP-U PDU for sending to the core network of the communication network via the second GTP-U tunnel; and
(d) provide a copy of the second uplink SDU to the second GTP-U entity or a further second GTP-U entity for forwarding the copy of the second uplink SDU to the primary NG-RAN via the further GTP-U tunnel.

According to a second aspect a communication network, in particular a 5G communication network for providing redundant data paths for communication of data between a user equipment, UE, and at least one user plane function, UPF, of a core network of the communication network is provided. The communication network comprises a primary next generation radio access network, NG-RAN, for establishing a first packet data unit, PDU session for the UE using a first protocol stack, wherein the first protocol stack includes at least one first GPRS tunnelling protocol user plane, GTP-U, entity and a first service data adaption protocol, SDAP, entity, wherein the first PDU session includes at least one first GTP-U tunnel between a core network of the communication network and the primary NG-RAN. The communication network further comprises a secondary NG-RAN for establishing a second PDU session for the UE using a second protocol stack, wherein the second protocol stack includes at least one second GTP-U entity and a second SDAP entity, wherein the second PDU session includes at least one second GTP-U tunnel between the core network of the communication network and the secondary NG-RAN.

Moreover, the communication network comprises a first packet duplication and elimination, PDE, entity in the first GTP-U entity and/or the first SDAP entity of the primary NG-RAN and a second PDE entity in the second GTP-U entity and/or the second SDAP entity (of the secondary NG-RAN. The first PDE entity is configured to:
(a) obtain a first downlink Ethernet frame or DetNet-IP packet from the first GTP-U entity;
(b) generate a first downlink service data unit, SDU, wherein the first downlink SDU comprises the first downlink Ethernet frame or DetNet-IP packet;
(c) generate a first downlink packet data unit, PDU, based on the first downlink SDU, wherein the first downlink PDU comprises the first downlink Ethernet frame or DetNet-IP packet for providing the first downlink PDU to the first SDAP entity or a first packet data convergence protocol, PDCP, entity of the primary NG-RAN; and
(d) provide a copy of the first downlink SDU to the first GTP-U entity or a further first GTP-U entity of the primary NG-RAN for forwarding the copy of the first downlink SDU to the secondary NG-RAN.

In a further possible implementation form of the second aspect, the first GTP-U entity is configured to extract the first downlink Ethernet frame or DetNet-IP packet from the payload of a first GPRS tunnelling protocol packet data unit, GTP PDU received by the primary NG-RAN through the first GTP-U tunnel for obtaining the first downlink Ethernet frame or DetNet-IP packet by the first PDE entity.

In a further possible implementation form of the second aspect, the network entity is configured to further establish at least one further GTP-U tunnel between the first GTP-U entity or 'the further first GTP-U entity of the primary NG-RAN and the second GTP-U entity or the further second GTP-U entity of the secondary NG-RAN for communicating user data related to the UE, wherein the first GTP-U entity or the further first GTP-U entity is configured to generate a GTP-U PDU based on the copy of the first downlink SDU for forwarding the GTP-U PDU to the second GTP-U entity or the further second GTP-U entity of the secondary NG-RAN through the at least one further GTP-U tunnel.

In a further possible implementation form of the second aspect, the first PDE entity of the primary NG-RAN is further configured to:
(a) obtain a first uplink Ethernet frame or DetNet-IP packet from the first PDCP entity;
(b) generate a first uplink service data unit, SDU, wherein the first uplink SDU comprises the first uplink Ethernet frame or DetNet-IP packet;
(c) generate a first uplink packet data unit, PDU, based on the first uplink SDU, wherein the first uplink PDU comprises the first uplink Ethernet frame or DetNet-IP packet for providing the first uplink PDU to the first GTP-U entity for generating a GTP-U PDU for sending to the core network of the communication network via the first GTP-U tunnel; and
(d) provide a copy of the first uplink SDU to the first GTP-U entity or the further first GTP-U entity for forwarding the copy of the first uplink SDU to the secondary NG-RAN via the at least one further GTP-U tunnel.

In a further possible implementation form of the second aspect, the first PDE entity is further configured to provide the copy of the first downlink SDU or the copy of the first uplink SDU to the first GTP-U entity or the further first GTP-U entity together with information indicative of whether the respective Ethernet frame or DetNet-IP packet is intended for the UE or the core network of the communication network.

In a further possible implementation form of the second aspect, the second PDE entity of the secondary NG-RAN is configured to:
(a) obtain a second downlink Ethernet frame or DetNet-IP packet from the second GTP-U entity;
(b) generate a second downlink service data unit, SDU, wherein the second downlink SDU comprises the second downlink Ethernet frame or DetNet-IP packet;
(c) generate a second downlink packet data unit, PDU, based on the second downlink SDU, wherein the second downlink PDU comprises the second downlink Ethernet frame or DetNet-IP packet for providing the second downlink PDU to the second SDAP entity or a second packet data convergence protocol, PDCP, entity of the secondary NG-RAN; and
(d) provide a copy of the second downlink SDU to the second GTP-U entity or a further second GTP-U entity for forwarding the copy of the second downlink SDU to the primary NG-RAN via the further GTP-U tunnel.

According to a third aspect a method for providing redundant data paths for communication of data for a user equipment, UE, in a communication network, in particular a 5G communication network is provided. The method comprises the steps of:
establishing a first packet data unit, PDU session for the UE using a primary next generation radio access network, NG-RAN, implementing a first protocol stack, wherein the first protocol stack includes at least one first GPRS tunnelling protocol user plane, GTP-U, entity and a first service data adaption protocol, SDAP, entity, wherein the establishment of the first PDU session includes establishing at least one first GTP-U tunnel between a core network of the communication network and the primary NG-RAN;
establishing a second PDU session for the UE using a secondary NG-RAN implementing a second protocol stack, wherein the second protocol stack includes at least one second GTP-U entity and a second SDAP entity, wherein the establishment of the second PDU session includes establishing at least one second GTP-U tunnel between the core network of the communication network and the secondary NG-RAN; and
providing a first packet duplication and elimination, PDE, entity in the first GTP-U entity and/or the first SDAP entity of the primary NG-RAN and a second PDE entity in the second GTP-U entity and/or the second SDAP entity of the secondary NG-RAN,
wherein the method further comprises the following steps performed by the first PDE entity:
   obtaining a first downlink Ethernet frame or DetNet-IP packet from the first GTP-U entity;
   generating a first downlink service data unit, SDU, wherein the first downlink SDU comprises the first downlink Ethernet frame or DetNet-IP packet;
   generating a first downlink packet data unit, PDU, based on the first downlink SDU, wherein the first downlink PDU comprises the first downlink Ethernet frame or DetNet-IP packet for providing the first downlink PDU to the first SDAP entity or a first packet data convergence protocol, PDCP, entity of the primary NG-RAN; and
   providing a copy of the first downlink SDU to the first GTP-U entity or a further first GTP-U entity of the primary NG-RAN for forwarding the copy of the first downlink SDU to the secondary NG-RAN.

The method further comprises the following steps performed by the second PDE entity:
obtaining a second downlink Ethernet frame or DetNet-IP packet from the second GTP-U entity;
generating a second downlink service data unit, SDU, wherein the second downlink SDU comprises the second downlink Ethernet frame or DetNet-IP packet;
generating a second downlink packet data unit, PDU, based on the second downlink SDU, wherein the second downlink PDU comprises the second downlink Ethernet frame or DetNet-IP packet for providing the second downlink PDU to the second SDAP entity or a second packet data convergence protocol, PDCP, entity of the secondary NG-RAN; and
providing a copy of the second downlink SDU to the second GTP-U entity for forwarding the copy of the second downlink SDU to the primary NG-RAN.

According to a fourth aspect a computer program product is provided, comprising a non-transitory computer-readable storage medium for storing program code which causes a computer or a processor to perform the method according to the third aspect, when the program code is executed by the computer or the processor.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:
Fig. 1 shows a schematic diagram of a 5G communication system including two URLLC application endpoints, a URLLC controlling server and a URLLC client;
Fig. 2 shows schematic diagrams illustrating user plane data stream paths for dual connectivity with split radio bearers within two mutually redundant PDU sessions;
Fig. 3 shows schematic diagrams illustrating user plane data stream paths for dual connectivity with master cell group (MCG) radio bearers and secondary cell group (SCG) radio bearers within two mutually redundant PDU sessions;
Fig. 4 shows a schematic diagram illustrating a possible point of failure in two dual redundant user plane data paths;
Fig. 5a shows a schematic diagram illustrating redundant user plane PDU data streams implemented according to an embodiment;
Fig. 5b shows a schematic diagram illustrating redundant user plane PDU data streams implemented according to a further embodiment;
Fig. 6 is a flow diagram illustrating the operation of a packet duplication and elimination (PDE) entity for implementing the redundant user plane PDU data streams of figure 5a or figure 5b;
equipment, UE, and at least one user plane function, UPF, of a core network of the communication network is provided. The communication network comprises a primary next generation radio access network, NG-RAN, for establishing a first packet data unit, PDU session for the UE using a first protocol stack, wherein the first protocol stack includes at least one first GPRS tunnelling protocol user plane, GTP-U, entity and a first service data adaption protocol, SDAP, entity, wherein the first PDU session includes at least one first GTP-U tunnel between a core network of the communication network and the primary NG-RAN. The communication network further comprises a secondary NG-RAN for establishing a second PDU session for the UE using a second protocol stack, wherein the second protocol stack includes at least one second GTP-U entity and a second SDAP entity, wherein the second PDU session includes at least one second GTP-U tunnel between the core network of the communication network and the secondary NG-RAN.

Moreover, the communication network comprises a first packet duplication and elimination, PDE, entity in the first GTP-U entity and/or the first SDAP entity of the primary NG-RAN and a second PDE entity in the second GTP-U entity and/or the second SDAP entity (of the secondary NG-RAN. The first PDE entity is configured to:
(a) obtain a first downlink Ethernet frame or DetNet-IP packet from the first GTP-U entity;
(b) generate a first downlink service data unit, SDU, wherein the first downlink SDU comprises the first downlink Ethernet frame or DetNet-IP packet;
(c) generate a first downlink packet data unit, PDU, based on the first downlink SDU, wherein the first downlink PDU comprises the first downlink Ethernet frame or DetNet-IP packet for providing the first downlink PDU to the first SDAP entity or a first packet data convergence protocol, PDCP, entity of the primary NG-RAN; and
(d) provide a copy of the first downlink SDU to the first GTP-U entity or a further first GTP-U entity of the primary NG-RAN for forwarding the copy of the first downlink SDU to the secondary NG-RAN.

In a further possible implementation form of the second aspect, the first GTP-U entity is configured to extract the first downlink Ethernet frame or DetNet-IP packet from the payload of a first GPRS tunnelling protocol packet data unit, GTP PDU received by the primary NG-RAN through the first GTP-U tunnel for obtaining the first downlink Ethernet frame or DetNet-IP packet by the first PDE entity.

In a further possible implementation form of the second aspect, the network entity is configured to further establish at least one further GTP-U tunnel between the first GTP-U entity or 'the further first GTP-U entity of the primary NG-RAN and the second GTP-U entity or the further second GTP-U entity of the secondary NG-RAN for communicating user data related to the UE, wherein the first GTP-U entity or the further first GTP-U entity is configured to generate a GTP-U PDU based on the copy of the first downlink SDU for forwarding the GTP-U PDU to the second GTP-U entity or the further second GTP-U entity of the secondary NG-RAN through the at least one further GTP-U tunnel.

In a further possible implementation form of the second aspect, the first PDE entity of the primary NG-RAN is further configured to:
(a) obtain a first uplink Ethernet frame or DetNet-IP packet from the first PDCP entity;
(b) generate a first uplink service data unit, SDU, wherein the first uplink SDU comprises the first uplink Ethernet frame or DetNet-IP packet;
(c) generate a first uplink packet data unit, PDU, based on the first uplink SDU, wherein the first uplink PDU comprises the first uplink Ethernet frame or DetNet-IP packet for providing the first uplink PDU to the first GTP-U entity for generating a GTP-U PDU for sending to the core network of the communication network via the first GTP-U tunnel; and
(d) provide a copy of the first uplink SDU to the first GTP-U entity or the further first GTP-U entity for forwarding the copy of the first uplink SDU to the secondary NG-RAN via the at least one further GTP-U tunnel.

In a further possible implementation form of the second aspect, the first PDE entity is further configured to provide the copy of the first downlink SDU or the copy of the first uplink SDU to the first GTP-U entity or the further first GTP-U entity together with information indicative of whether the respective Ethernet frame or DetNet-IP packet is intended for the UE or the core network of the communication network.

In a further possible implementation form of the second aspect, the second PDE entity of the secondary NG-RAN is configured to:
(a) obtain a second downlink Ethernet frame or DetNet-IP packet from the second GTP-U entity;
(b) generate a second downlink service data unit, SDU, wherein the second downlink SDU comprises the second downlink Ethernet frame or DetNet-IP packet;
(c) generate a second downlink packet data unit, PDU, based on the second downlink SDU, wherein the second downlink PDU comprises the second downlink Ethernet frame or DetNet-IP packet for providing the second downlink PDU to the second SDAP entity or a second packet data convergence protocol, PDCP, entity of the secondary NG-RAN; and
(d) provide a copy of the second downlink SDU to the second GTP-U entity or a further second GTP-U entity for forwarding the copy of the second downlink SDU to the primary NG-RAN via the further GTP-U tunnel.

In a further possible implementation form of the second aspect, the second PDE entity of the secondary NG-RAN is further configured to:
(a) obtain a second uplink Ethernet frame or DetNet-IP packet from the second PDCP entity;
(b) generate a second uplink service data unit, SDU, wherein the second uplink SDU comprises the second uplink Ethernet frame or DetNet-IP packet;
(c) generate a second uplink packet data unit, PDU, based on the second uplink SDU, wherein the second uplink PDU comprises the second uplink Ethernet frame or DetNet-IP packet for providing the second uplink PDU to the second GTP-U entity for generating a GTP-U PDU for sending to the core network of the communication network via the second GTP-U tunnel; and
(d) provide a copy of the second uplink SDU to the second GTP-U entity or a further second GTP-U entity for forwarding the copy of the second uplink SDU to the primary NG-RAN via the further GTP-U tunnel.

In a further possible implementation form of the second aspect, the second PDE entity is further configured to provide the copy of the second downlink SDU or the copy of the second uplink SDU to the second GTP-U entity or the further second GTP-U entity together with information indicative of whether the respective Ethernet frame or DetNet-IP packet is intended for the UE or the core network of the communication network.

In a further possible implementation form of the second aspect, the first PDE entity of the primary NG-RAN is configured to receive the copy of the second downlink SDU and/or the copy of the second uplink SDU from the first GTP-U entity or the further first GTP-U entity of the primary NG-RAN.

In a further possible implementation form of the second aspect, the first PDE entity is further configured to extract a first set of downlink stream identifiers from the first downlink Ethernet frame or DetNet-IP packet; store the set of first downlink stream identifiers in a memory, if it cannot be found in the memory; extract the second downlink Ethernet frame or DetNet-IP packet from the copy of the second downlink SDU received from the first GTP-U entity or the further first GTP-U entity; extract a second set of downlink stream identifiers from the second downlink Ethernet frame or DetNet-IP packet and store the second set of downlink stream identifiers in the memory, if it cannot be found in the memory; associate the first set of downlink stream identifiers with the second set of downlink stream identifiers as a redundant pair of stream identifier sets.

In a further possible implementation form of the second aspect, the first PDE entity is further configured to extract a first set of uplink stream identifiers from the first uplink Ethernet frame or DetNet-IP packet and store the first set of uplink stream identifiers in a memory, if it cannot be found in the memory; extract the second uplink Ethernet frame or DetNet-IP packet from the copy of the second uplink SDU received from the first GTP-U entity or the further first GTP-U entity; extract a second set of uplink stream identifiers from the second uplink Ethernet frame or DetNet-IP packet and store the second set of uplink stream identifiers in the memory, if it cannot be found in the memory; associate the first set of uplink stream identifiers with the second set of uplink stream identifiers as a redundant pair of stream identifier sets.

In a further possible implementation form of the second aspect, the first PDE entity is further configured to replace the second set of downlink stream identifiers in the second downlink Ethernet frame or DetNet-IP packet with the first set of downlink stream identifiers to obtain the first downlink Ethernet frame or DetNet-IP packet;
generate the first downlink service data unit, SDU, wherein the first downlink SDU comprises the first downlink Ethernet frame or DetNet-IP packet; and
generate the first downlink packet data unit, PDU, based on the first downlink SDU, wherein the first downlink PDU comprises the first downlink Ethernet frame or DetNet-IP packet for providing the first downlink PDU to the first SDAP entity or the first PDCP entity of the primary NG-RAN.

In a further possible implementation form of the second aspect, the first PDE entity is further configured replace the second set of uplink stream identifiers in the second uplink Ethernet frame or DetNet-IP packet with the first set of uplink stream identifiers to obtain the first uplink Ethernet frame or DetNet-IP packet;
generate the first uplink service data unit, SDU, wherein the first uplink SDU comprises the first uplink Ethernet frame or DetNet-IP packet; and
generate the first uplink packet data unit, PDU, based on the first uplink SDU, wherein the first uplink PDU comprises the first uplink Ethernet frame or DetNet-IP packet for providing the first uplink PDU to the first GTP-U entity for sending to the core network of the communication network via the first GTP-U tunnel.

In a further possible implementation form of the second aspect, the first PDE entity is further configured to extract a sequence number from a Ethernet frame or DetNet-IP packet, wherein the Ethernet frame or DetNet-IP packet is the first downlink Ethernet frame or DetNet-IP packet from the first GTP-U entity or the first uplink Ethernet frame or DetNet-IP packet from the first PDCP entity or the second downlink Ethernet frame or DetNet-IP packet from first GTP-U entity or the further first GTP-U entity or the second uplink Ethernet frame or DetNet-IP packet from the first GTP-U entity or the further first GTP-U entity;
store the extracted sequence number in a memory including associating the extracted sequence number with the redundant pair of stream identifier sets of the extracted set of stream identifiers if the extracted sequence number is not equal to any sequence number in memory associated with the redundant pair of stream identifier sets, wherein the extracted set of stream identifiers is one set of the redundant pair of stream identifier sets;
discard the Ethernet frame or DetNet-IP packet including aborting all operations of generating data packet encapsulating the Ethernet frame or DetNet-IP packet providing to other protocol layers for further processing if the extracted sequence number is equal to one of the sequence numbers in the memory associated with the redundant pair of stream identifier sets, wherein the extracted set of stream identifiers is one set of the redundant pair of stream identifier sets.

According to a third aspect a method for providing redundant data paths for communication of data for a user equipment, UE, in a communication network, in particular a 5G communication network is provided. The method comprises the steps of:
establishing a first packet data unit, PDU session for the UE using a primary next generation radio access network, NG-RAN, implementing a first protocol stack, wherein the first protocol stack includes at least one first GPRS tunnelling protocol user plane, GTP-U, entity and a first service data adaption protocol, SDAP, entity, wherein the establishment of the first PDU session includes establishing at least one first GTP-U tunnel between a core network of the communication network and the primary NG-RAN;
establishing a second PDU session for the UE using a secondary NG-RAN implementing a second protocol stack, wherein the second protocol stack includes at least one second GTP-U entity and a second SDAP entity, wherein the establishment of the second PDU session includes establishing at least one second GTP-U tunnel between the core network of the communication network and the secondary NG-RAN; and
providing a first packet duplication and elimination, PDE, entity in the first GTP-U entity and/or the first SDAP entity of the primary NG-RAN and a second PDE entity in the second GTP-U entity and/or the second SDAP entity of the secondary NG-RAN,
wherein the method further comprises the following steps performed by the first PDE entity:
   obtaining a first downlink Ethernet frame or DetNet-IP packet from the first GTP-U entity;
   generating a first downlink service data unit, SDU, wherein the first downlink SDU comprises the first downlink Ethernet frame or DetNet-IP packet;
   generating a first downlink packet data unit, PDU, based on the first downlink SDU, wherein the first downlink PDU comprises the first downlink Ethernet frame or DetNet-IP packet for providing the first downlink PDU to the first SDAP entity or a first packet data convergence protocol, PDCP, entity of the primary NG-RAN; and
   providing a copy of the first downlink SDU to the first GTP-U entity or a further first GTP-U entity of the primary NG-RAN for forwarding the copy of the first downlink SDU to the secondary NG-RAN.

In a further possible implementation form of the third aspect, the method further comprises the following steps performed by the second PDE entity:
obtaining a second downlink Ethernet frame or DetNet-IP packet from the second GTP-U entity;
generating a second downlink service data unit, SDU, wherein the second downlink SDU comprises the second downlink Ethernet frame or DetNet-IP packet;
generating a second downlink packet data unit, PDU, based on the second downlink SDU, wherein the second downlink PDU comprises the second downlink Ethernet frame or DetNet-IP packet for providing the second downlink PDU to the second SDAP entity or a second packet data convergence protocol, PDCP, entity of the secondary NG-RAN; and
providing a copy of the second downlink SDU to the second GTP-U entity for forwarding the copy of the second downlink SDU to the primary NG-RAN.

According to a fourth aspect a computer program product is provided, comprising a non-transitory computer-readable storage medium for storing program code which causes a computer or a processor to perform the method according to the third aspect, when the program code is executed by the computer or the processor.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:

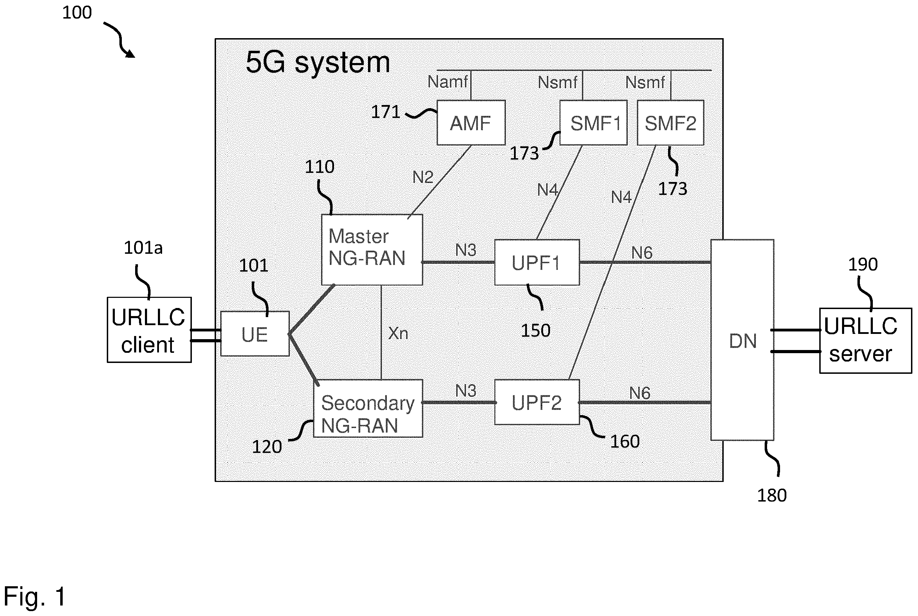

Fig. 1 shows a schematic diagram of a 5G communication system including two URLLC application endpoints, a URLLC controlling server and a URLLC client;

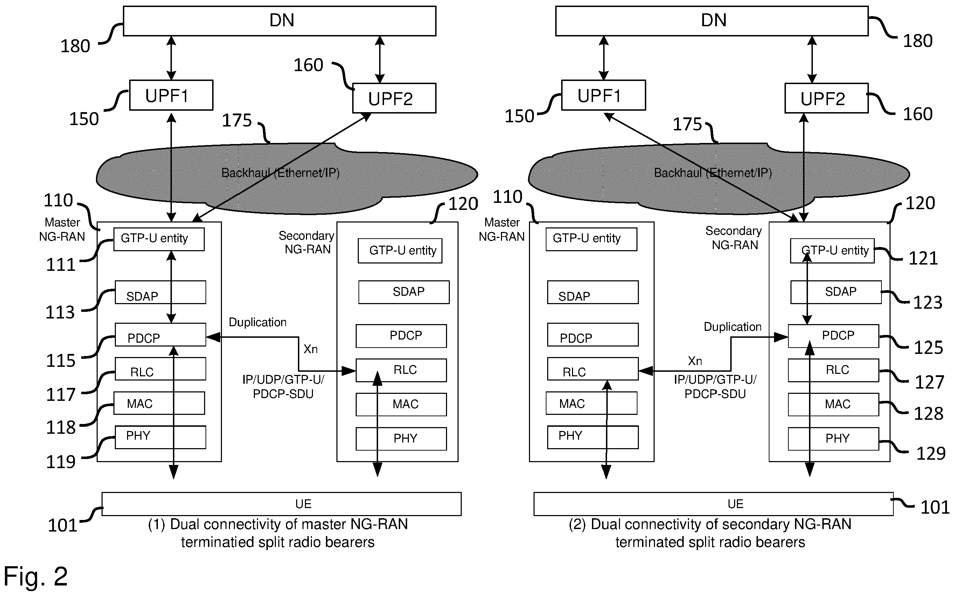

Fig. 2 shows schematic diagrams illustrating user plane data stream paths for dual connectivity with split radio bearers within two mutually redundant PDU sessions;

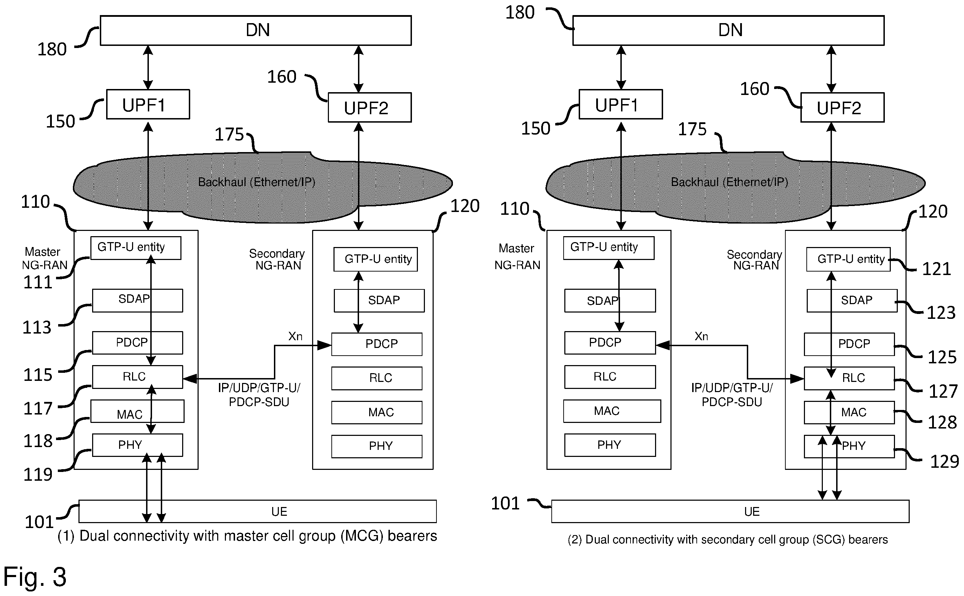

Fig. 3 shows schematic diagrams illustrating user plane data stream paths for dual connectivity with master cell group (MCG) radio bearers and secondary cell group (SCG) radio bearers within two mutually redundant PDU sessions;

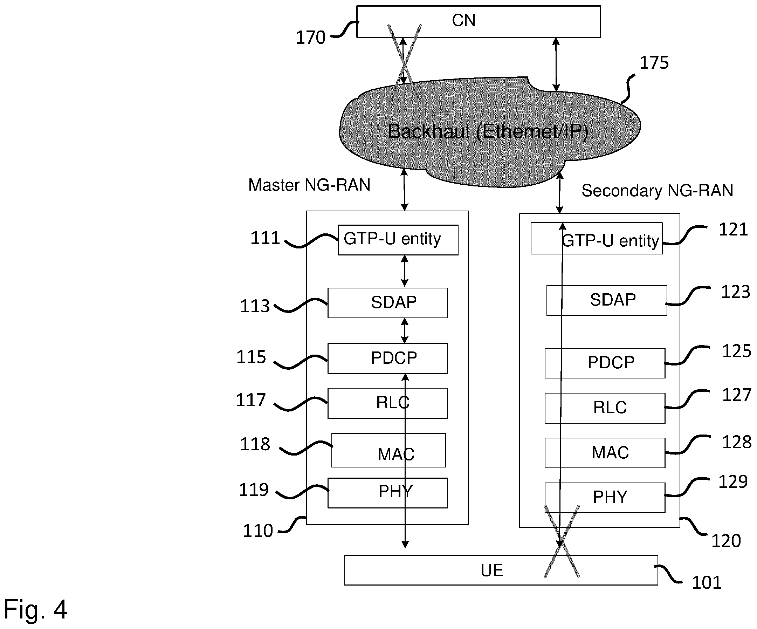

Fig. 4 shows a schematic diagram illustrating a possible point of failure in two dual redundant user plane data paths;

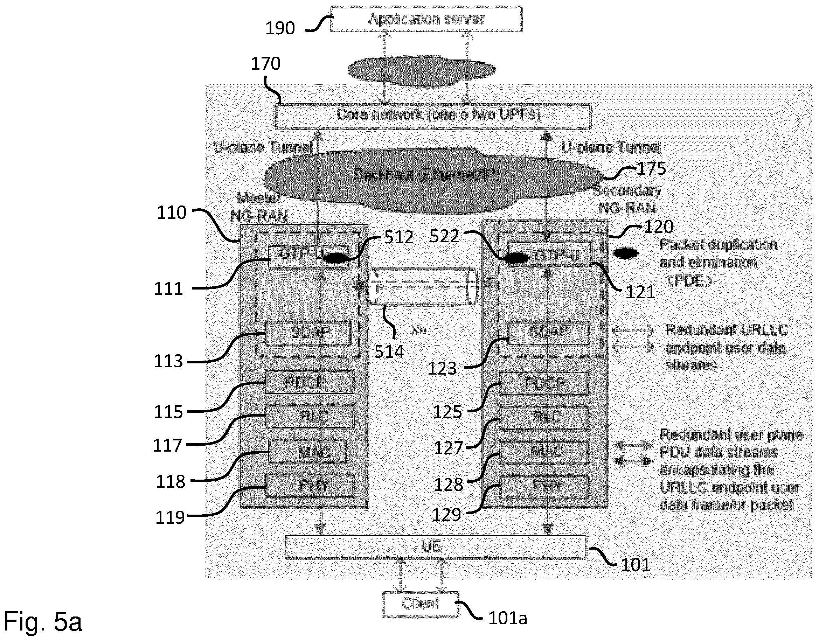

Fig. 5a shows a schematic diagram illustrating redundant user plane PDU data streams implemented according to an embodiment;

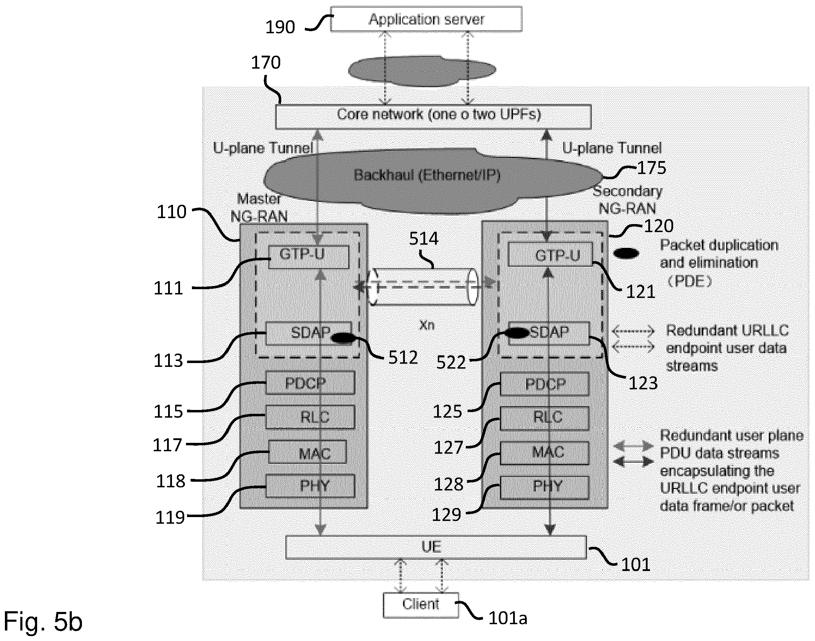

Fig. 5b shows a schematic diagram illustrating redundant user plane PDU data streams implemented according to a further embodiment;

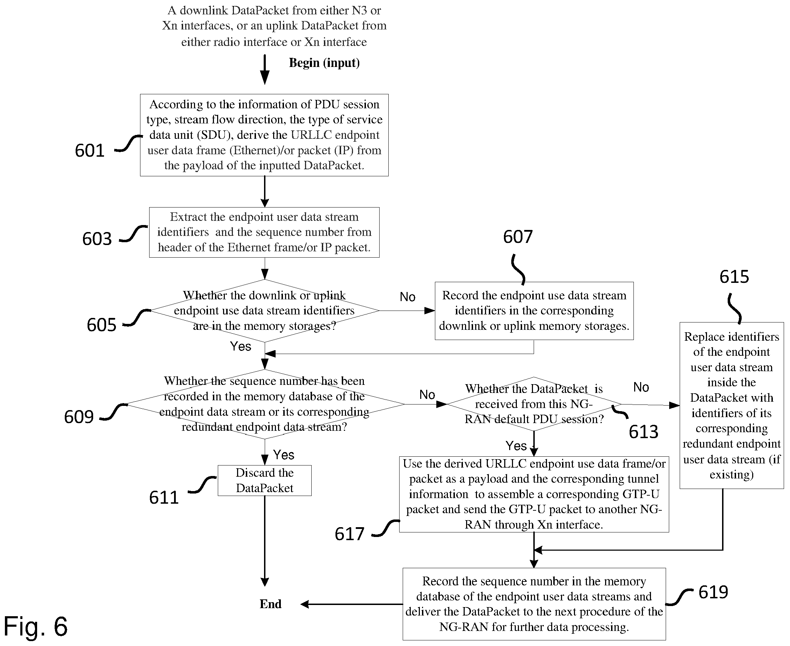

Fig. 6 is a flow diagram illustrating the operation of a packet duplication and elimination (PDE) entity for implementing the redundant user plane PDU data streams of figure 5a or figure 5b;

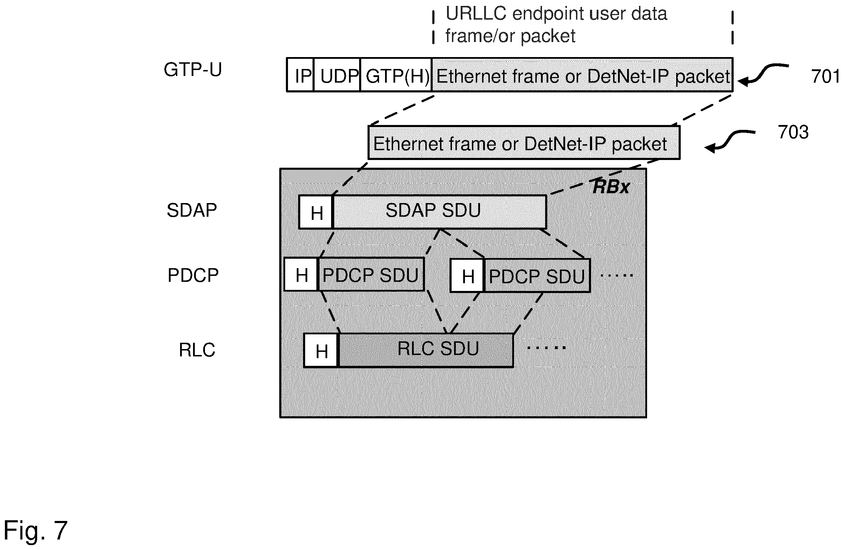

Fig. 7 shows a schematic diagram illustrating the encapsulation of URLLC endpoint user data packets in a service data unit (SDU) of a PDU data packet of different layers in a NG-RAN as implemented by an embodiment; and

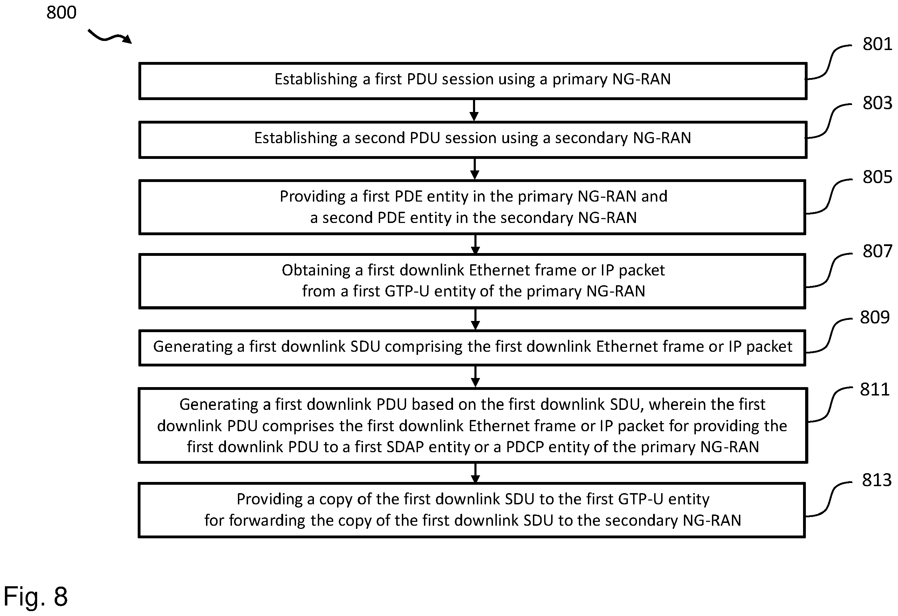

Fig. 8 is a flow diagram illustrating a method according to an embodiment.

In the following, identical reference signs refer to identical or at least functionally equivalent features.

### DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

Before describing different embodiments in more detail, in the following some technical background as well as terminology concerning cellular communication networks, in particular in accordance with the 3GPP 5G standard will be introduced making use of one or more of the following abbreviations:
- FRER: Frame replication and elimination for reliability
- GTP-U: GPRS Tunnelling Protocol User Plane
- NG-RAN: Next generation radio access network
- PDCP: Packet Data Convergence Protocol
- RLC: Radio link control
- UPF: User plane function
- URLLC: Ultra-reliable low latency communication

Figure 1 shows a 5G communication system 100 that enables two URLLC application endpoints, namely a URLLC controlling server 190 and a controlled URLLC client 101a (implemented on a UE 101 also referred to as App 101a) to communicate with each other using Ethernet or IP traffic. As illustrated in figure 1, the 5G communication system 100 (between the UE 101 and one or two UPFs 150, 160) as one portion of the endpoint communication link provides a 5G service to deliver the Ethernet or IP traffic to the endpoints. In other words, the endpoints (UE 101 and UPF 150, 160) of the 5G user plane receive the URLLC Endpoint User Data Traffic Streams of Ethernet frames or IP packets, in particular DetNet-IP packets, while the 5G system 100 transfers the URLLC Endpoint User Data Traffic Streams as the payload of 5G user-plane data packets.

Due to strict availability and reliability requirements, in order to ensure the ultra-availability of periodic deterministic communications, the URLLC endpoints may duplicate each Ethernet frame or IP packet and send these to the destination via two independent paths, while the receiving endpoints eliminate the duplication of received frames/packets. With such a dual redundant transmission the URLLC Endpoint User Data Traffic Streams of Ethernet frames or IP packets are hardly impacted by abnormal events, such as a packet loss on the communication link or a communication network failure. Such kind of dual-packet redundant communications generally applies one of the so-called frame replication and elimination for reliability (FRER) protocols, e.g., IEEE 802.1CB, IEC 62439-3's Parallel Redundancy Protocol (PRP), HSR (High-Availability Seamless Redundancy), or IETF RFC 8655 Architecture of Deterministic Networking (DetNet) on the top of the Ethernet/IP protocol. Deterministic Networking (DetNet) operated at the IP/MPLS layer provides a capability for the delivery of data flows with extremely low packet loss rates and/or bounded end-to-end delivery latency. The DetNet layer can encapsulate the IP layer packet as the URLLC endpoint user data packet, called DetNet-IP packet, for sending to access points (e.g., UE or the core network) of 5G system. Each of the two URLLC application endpoints, namely the URLLC controlling server 190 and the controlled URLLC client 101a might use one or two sets of stream identifiers for sending and/or receiving the redundant Ethernet frame or DetNet-IP packet traffic via two independent paths, one set of stream identifiers using for one path and another set of stream identifiers for another path (in case one set of stream identifiers, the traffic sending both two path with the same set of stream identifiers). The sets of stream identifiers using in two independent paths for sending/or receiving traffic are called the redundant pair of stream identifier sets of an URLLC endpoint. A common feature of these FRER protocols is that an accumulating sequence number (SN) is applied into each frame/packet in the sending endpoints. At the receiving endpoint, the duplicate frames are eliminated based on parameter set of stream identifiers (for an Ethernet stream, such as the source/and destination Ethernet MAC addresses, VLAN identifier, and protocol type, etc.; for an IP based stream, such as IP source/and destination addresses, MPLS flow identifier, and protocol types, source/and destination port number, etc.) and the sequence number in the headers of those frame/packets (the sequence number in DetNet layer for DetNet-IP packet).

As shown in Figure 1, each application message of the URLLC endpoints is duplicated and encapsulated into two redundant Ethernet frames/DetNet-IP packets by using one of the corresponding FRER protocols to send to the 5G communications system 100, for instance, via a data network (DN) 180. These Ethernet frames/DetNet-IP packets are referred to as "URLLC endpoint user data frames/packets" here. The headers of periodic URLLC endpoint user data frames/packets may contain stream identifiers and a sequence number according to one of the above-mentioned FRER protocols. When periodic URLLC endpoint user data frames/packets are transferred to the user plane endpoint (UPF 150, 160 or UE 101) of the 5G system 100 over two independent paths, the 5G system 100 can reliably transfer these Ethernet frames/DetNet-IP packets into another 5G endpoint at a predetermined time. This challenge must be addressed by the 5G communication system 100 to be used for communications of URLLC applications of vertical industries.

To support ultra-reliable low latency communication (URLLC) for vertical industry applications, the 5G system 100 should be able to reliably transfer the URLLC endpoint user data frames/packets within a predetermined time range. An end-to-end dual connectivity solution based on two end-to-end dual redundant user plane data paths is described in 3GPP TS 23.501. As described therein, two redundant PDU (packet data unit) sessions are used to support two mutually redundant URLLC endpoint user data streams (as shown in Figure 2 and Figure 3 and will be described in more detail below) between the URLLC server 190 and the URLLC client 101a. The PDU session spans from the UE 101 via the NG-RAN 110, 120 to the UPF 150, 160. In the N3 interface between the NG-RAN 110, 120 and UPF 150, 160, one PDU session is supported by a user-plane tunnel established between UPF1 150 and the master NG-RAN 110, while another PDU session is supported by another user plane tunnel established between the UPF2 160 and the master NG-RAN 110 or established between the UPF2 160 and the secondary NG-RAN 120. Between the UE 101 and the NG-RAN 110, 120, the two PDU sessions are supported by the dual connectivity in low radio protocol stacks defined in 3GPP TS 37.340 (as will be described in more detail in the context of figures 2 and 3 further below).

According to 3GPP TS 37.340, there are four types of dual connectivity for the NG-RAN, which will be described in the following under further reference to figures 2 and 3.

Figure 2 illustrates the dual connectivity (DC) of master NG-RAN terminated split radio bearers (left diagram in figure 2) and secondary NG-RAN terminated split radio bearers (right diagram in figure 2), respectively. The two core network (CN) user plane tunnels and two split radio bearers used for the user plane data transfer of the two redundant PDU sessions are all terminated in the same NG-RAN. The PDCP duplication is performed for the secondary radio bearer.

Figure 3 illustrates the dual connectivity with the master cell group (MCG) radio bearers (left diagram in figure 3) and with the secondary cell group (SCG) radio bearers (right diagram in figure 3), respectively. The radio bearers in a NG-RAN 110, 120 are used for the two redundant PDU sessions. As illustrated in figures 2 and 3, each NG-RAN may comprise a GTP entity (also referred to as GTP-U entity 111, 121, a SDAP entity 113, 123, a PDCP entity 115, 125, a RLC entity 117, 127, a MAC layer entity 118, 128 and a PHY layer entity 119, 129 in the respective protocol stack.

However, the end-to-end dual redundant user plane paths shown in figures 2 and 3 based on the dual-connectivity between the NG-RANs 110, 120 and the UE 101 have at least the following reliability defects. Preventing single point of failure is a basic principle of the reliability design. However, the two redundant end-to-end user-plane transmission paths have the following single point of failure in the dual-connectivity provided by the NG-RANs 110, 120. For the dual connectivity with split radio bearers (Figure 2), the first single point of failure is that both user-plane transmission tunnels connected with the core network 170 are terminated in the same NG-RAN (master or secondary NG-RAN 110, 120). The processing of transport layer protocols (IP and GTP-U) of the two user plane tunnels may be another first single point of failure. The PDCP layer may also be a single point of failure because RLC frames of one NG-RAN (e.g., the secondary NG-RAN 120) are duplicated by the PDCP layer of the counterpart NG-RAN (e.g., the master NG-RAN 110) and transmitted over the Xn interface.

Regardless of the dual connectivity of the master cell group (MCG) radio bearers or of the secondary cell group (SCG) radio bearers, since the RLC frames of the two redundant paths are processed at the same MAC layer 118, 128, the MAC layer 118, 128 is the single point of failure of the two redundant paths. In addition, data packets of the two redundant paths use the same NG-RAN radio bearers to transmit data to the air interface. This might be also another single point of failure of the two redundant paths.

Due to constraints of limited radio resources and mutual radio interference between narrowly separated frequency bands, practically it is difficult to arrange the radio network coverage to each service area with more than two cells simultaneously. This is the main reason why the URLLC solution is based on the dual connectivity of not more than two radio bearers. However, once one of the two cells experiences a hardware failure, normally it takes a long time, e.g., hours, to recover the cell experiencing the failure and the availability of service in this area covered by the cell experiencing the failure may be impacted for a long time. The failure of one radio cell in the dual connectivity in the solution described above will cause that one user plane path is not available for a long time. Obviously, the availability of the remaining user plane path is unlikely to be able to support the URLLC applications.

The 5G communication system or network 100 usually consists of multiple disjoint subnets, such as the core network 170, backbone network 150, and the radio access network(s) 110, 120. Each subnet usually consists of one or more network functions (such as the AMF 171 and the SMFs 173 shown in figure 1), and a network function usually consists of multiple hardware and software modules. From the perspective of software and hardware, the communication path of URLLC endpoint user data streams in the 5G system 100 consists of multiple complex communication chains. If a hardware or software module in one of the communication chains is in failure or operating abnormally, it may cause the endpoint user data frames/packets transferred by the 5G system 100 to experience an error, or packet loss, or the increase of transmission latency which impacts the availability of the related communication path. In addition, due to environmental factors, the transmission latency and packet loss rate over the air interface may be unstable. Assuming one of the dual redundant user plane paths is unavailable due to a hardware or software module in failure or operating abnormally in this path of the core network 170, backbone network 175, or NG-RAN 110, 120 (as illustrated in Figure 4), while the communication over the air interface is unstable to cause a packet loss or longer transmission delay in another path, the two events will cause the two redundant user plane data communication paths to become unavailable simultaneously.

The goal for 5G to support ultra-reliable low latency communication (URLLC) for vertical industry applications is to transfer the URLLC endpoint user data frames/packets to interface connection points of the vertical industry applications without any error and within a predetermined time range. Since the availability and reliability requirements of vertical industry applications are much higher than those of traditional telecommunication applications, a dual redundant paths' solution to be used for transferring the dual redundant URLLC endpoint user data frames/packets has been proposed in 3GPP TS 23.501; System architecture for the 5G System (5GS); Stage 2, Release 16. However, as already mentioned above, there may arise availability and reliability defects in the solution disclosed therein.

Thus, there is a need to enhance the availability and reliability to support applications of ultra-reliable low latency communication (URLLC) by eliminating or mitigating those defects in the proposed 3GPP solution mentioned above. As will be described in more detail in the following, this need is addressed by one or more of the embodiments disclosed herein.

More specifically, to support URLLC for vertical industry applications, the 5G system 100 is facing a challenge of providing communications with ultra-high availability and reliability. There are two factors to be considered here. The first factor is that any momentary error or disturbance in a software or hardware module of the communication path which is used for transferring the URLLC endpoint user data streams could impact the availability of this communication. The second factor is that the availability of the radio link may be affected by environmental factors. For strict requirements of availability and reliability given to a 5G communication path with multiple communication chains, even though two redundant user plane data paths are applied into the transportation of the same URLLC endpoint user data streams, the unavailability of both two redundant user data communication paths could happen. Thus, embodiments disclosed herein allow improving the availability and reliability in case multiple abnormal events happened in the two redundant paths simultaneously.

As already described above, there may be availability and reliability defects of single point of failure in the dual-connectivity solution of NG-RAN radio protocol stacks in the solution disclosed in 3GPP TS 23.501; System architecture for the 5G System (5GS); Stage 2, Release 16. Embodiments disclosed herein allow preventing such a single point of failure in two redundant 5G end-to-end user-plane transmission paths.

Two main embodiments of the invention will be described in the following under reference to figures 5a and 5b. Similar to the solutions described above, two redundant PDU sessions are used to support the two mutually redundant URLLC endpoint user data streams communicating between the application server 190 and the client 101a. One PDU session spans from the UE 101 via the Master NG-RAN 110 to the UPF1 150 (in the core network 170), while the other PDU Session spans from the UE 101 via the Secondary NG-RAN 120 to the UPF2 160 (in the core network 170). One main difference between the embodiments disclosed herein and the conventional solution(s) described above is that the radio interface dual connectivity through the PDCP layer 115, 125 of one of the NG-RANs 110, 120 communicating with the RLC layer 117, 127 of the other one of the NG-RANs 110, 120 (as illustrated in figure 2 and 3 and disclosed in 3GPP TS 37.340, NR; Multi-connectivity; Overall description; Stage-2, release 16) is not employed by embodiments of the invention because of the defect of the single point of failure of the conventional solution.

More specifically, according to a first main embodiment a network entity for providing redundant data paths for communication of data for the UE 101 in the 5G communication network 100 is provided. The network entity is configured to establish a PDU session for the UE 101 using the primary or Master NG-RAN 110 implementing a first protocol stack, wherein the first protocol stack includes at least one first GTP-U entity 111 and a first SDAP entity 113, wherein the establishment of the first PDU session includes establishing at least one first GTP-U tunnel between the core network 170 of the 5G communication network 100 and the primary NG-RAN 110.

The network entity is further configured to establish a second redundant PDU session for the UE 101 using the secondary NG-RAN 120 implementing a second protocol stack, wherein the second protocol stack includes at least one second GTP-U entity 121 and a second SDAP entity 123, wherein the establishment of the second PDU session includes establishing at least one second GTP-U tunnel between the core network 170 of the 5G communication network 100 and the secondary NG-RAN 120.

As illustrated in figures 5a and 5b, the network entity is further configured to provide a first packet duplication and elimination, PDE, entity 512 in the first GTP-U entity 111 and/or the first SDAP entity 113 of the primary NG-RAN 110 and a second PDE entity 522 in the second GTP-U entity 121 and/or the second SDAP entity 123 of the secondary NG-RAN 120.

The first PDE entity 512 is configured to: (a) obtain a first downlink Ethernet frame or DetNet-IP packet 703 (illustrated in figure 7) from the first GTP-U entity 111; (b) generate a first downlink service data unit, SDU, wherein the first downlink SDU comprises the first downlink Ethernet frame or DetNet-IP packet 703; (c) generate a first downlink packet data unit, PDU, based on the first downlink SDU, wherein the first downlink PDU comprises the first downlink Ethernet frame or DetNet-IP packet 703 for providing the first downlink PDU to the first SDAP entity 113 or a first PDCP entity 115 of the primary NG-RAN 110; and (d) provide a copy of the first downlink SDU to the first GTP-U entity 111 for forwarding the copy of the first downlink SDU to the secondary NG-RAN 120.

In an embodiment, the second PDE entity 522 is configured to: (a) obtain a second downlink Ethernet frame or DetNet-IP packet 703 from the second GTP-U entity 121; (b) generate a second downlink service data unit, SDU, wherein the first downlink SDU comprises the second downlink Ethernet frame or DetNet-IP packet 703; (c) generate a second downlink packet data unit, PDU, based on the second downlink SDU, wherein the second downlink PDU comprises the second downlink Ethernet frame or DetNet-IP packet 703 for providing the second downlink PDU to the second SDAP entity 123 or a second packet data convergence protocol, PDCP, entity 125 of the secondary NG-RAN 120; and (d) provide a copy of the second downlink SDU to the second GTP-U entity 121 for forwarding the copy of the second downlink SDU to the primary NG-RAN 110.

According to embodiments disclosed herein, in the Xn interface between the master NG-RAN 110 and the secondary NG-RAN 120, the master NG-RAN 110 may trigger the establishment of at least one user plane data tunnel 514 (referred to as GTP-U tunnel 514) for transferring data streams supported by the own default PDU session for the UE 101 to the secondary NG-RAN 120, while the secondary NG-RAN 120 acknowledges the request of the master, i.e. the primary NG-RAN 110 for using the at least one user plane data tunnel 514 (referred to as GTP-U tunnel 514) by providing the user plane tunnel endpoint information for transferring the data streams supported by the secondary NG-RAN's own default PDU session for the UE 101. After the establishment, the at least one user plane data tunnel 514 is used for mutually transferring the downlink (sent from the URLLC server 190) and uplink (sent from the URLLC client 101a) URLLC endpoint user data streams, i.e. Ethernet frames or DetNet-IP packets. Since each NG-RAN 110, 120 is established on each own default PDU session to support transferring one of the two redundant URLLC user data (downlink and uplink) streams, establishing the at least one user plane data tunnel 514 in the Xn interface enables each NG-RAN 110, 120 to receive both downlink and uplink URLLC endpoint user data streams supported by the counterpart NG-RAN's default PDU session for the UE 101. Thus, each NG-RAN 110, 120 may receive both the two redundant URLLC endpoint user data streams in both downlink and uplink.

Each NG-RAN 110, 120 may use one or two user plane data tunnels, i.e., GTP-U tunnels 514 to transfer URLLC endpoint user streams, i.e. Ethernet frames or DetNet-IP packets supported by its own default PDU session for the UE 101 to the other NG-RAN 120, 110. In case of two user plane data tunnels, i.e., GTP-U tunnels 514 to transfer URLLC endpoint user streams, i.e. Ethernet frames or DetNet-IP packets, the two NG-RANs 110, 120 may agree on one user plane data tunnel used for the downlink flow direction data streams and another user plane data tunnel used for the uplink flow direction data streams. In an embodiment, in case of establishing only one user plane data tunnel, such as the user plane data tunnel 514, the header of this user plane data (i.e., GTP-U) tunnel packet (including the Ethernet frame or DetNet-IP packet as payload) may include the information for identifying the flow direction of data streams, i.e., downlink or uplink.

Since each NG-RAN 110, 120 may receive both the two redundant URLLC endpoint user data streams in both downlink and uplink, in an embodiment, each NG-RAN 110, 120 may extract the "endpoint user data stream identifiers" (including, for instance, source and destination Ethernet MAC addresses, VLAN tag identifiers or source and destination IP addresses, MPLS tag identifiers, next level protocol type, (e.g. TCP or UDP), source and destination ports) and the sequence number from a received Ethernet frame or a received DetNet-IP packet. The data packets transferred with the default PDU sessions for the UE 101 of the two NG-RANs 110, 120 received by each NG-RAN may encapsulate the Ethernet frames or DetNet-IP packets of the two redundant URLLC endpoint user data streams. The data packets may be the downlink (from the core network 170) or uplink (from the UE 101) PDU data packets supported by the own NG-RAN's default PDU session, or the user plane data (i.e., GTP-U) packets from the Xn interface encapsulating the Ethernet frames or DetNet-IP packets supported by the counterpart NG-RAN's default PDU session for the UE 101. Normally (without data loss in a communication), for a given data flow direction, i.e., downlink or uplink, each NG-RAN 110, 120 may be able to deliver two Ethernet frames or DetNet-IP packets (each in one of the two redundant endpoint user data streams related to the same UE 101) with properties of the same stream endpoint identifier mapping logic, same sequence number, and probably with the same sending time stamp, from two received data packets.

For each data flow direction, i.e. downlink or uplink, each NG-RAN 110, 120 may extract the endpoint user data stream identifiers, the sequence number from the received Ethernet frames or DetNet-IP packets (of redundant URLLC endpoint user data streams). Based on extracted endpoint user data stream identifiers, the sequence number and the recorded previously received sequence numbers of the two redundant endpoint user data streams, each NG-RAN 110, 120 identifies whether a data packet encapsulating the extracted Ethernet frame or DetNet-IP packet has been received previously.

In case the data packet encapsulating the extracted Ethernet frame or DetNet-IP packet has already been received before, the respective NG-RAN 110, 120 may discard the respective data packet. Otherwise, the data packet is further processed by the by other data processing modules of the NG-RAN 110, 120 in order to send the related data packets to the UE 101 via the radio interface (downlink) or to the core network 170 via the N3 interface (uplink). In addition to sending out the processed data packet from the respective NG-RAN 110, 120 via the radio interface or the N3 interface, some further operations may be performed, i.e, if the data packet is not received from the Xn interface, the NG-RAN 110, 120 may copy the extracted Ethernet frame or DetNet-IP packet and use it to generate a data packet, in particular a GTP-U data packet for sending the data packet to the other NG-RAN 120, 110 via the user plane data tunnel, i.e. the GTP-U tunnel 514 provided by the Xn interface.

As will be appreciated, by each NG-RAN's function of duplicating the URLLC endpoint user data packet, i.e. Ethernet frame or DetNet-IP packet encapsulated in the user plane data packet of its own NG-RAN's supported PDU session to the other NG-RAN and selecting to process the first arrived data packet in the two data packets which encapsulates the two redundant endpoint user data packets, i.e. Ethernet frames or DetNet-IP packets respectively, embodiments disclosed herein provide in particular the following advantages: (i) enhancement of the availability and reliability of 5G communications, e.g., if one of two endpoint user data packets, i.e. Ethernet frames or DetNet-IP packets is lost in the radio communication while another endpoint user data packet is lost in the core network 170, and vice versa; (ii) potential decreasing of end to end communication latency; and (iii) avoiding the single point of failure for conventional dual connectivity approaches in NG-RANs described above.

In the embodiments shown in figures 5a and 5b, two redundant PDU sessions are provided for supporting two mutually redundant URLLC endpoint user data streams communicating between the server 190 and the client 101a operating on the UE 101. One PDU session spans from the UE 101 via the Master NG-RAN 110 to UPF1 150 of the core network 170, while the other PDU Session spans from the UE 101 via the Secondary NG-RAN 120 to the UPF2 160 of the core network 170.

The master NG-RAN 110 and the secondary NG-RAN 120 use their own radio resources, such as base stations or access points, to support the communication with the UE 101. Embodiments disclosed herein may make use of the lower radio protocol layers' communication between the two NG-RAN functions which has been defined in 3GPP TS 37.340, NR; Multi-connectivity; Overall description; Stage-2, release 16 for the dual connectivity through the PDCP layer of one NG-RAN communicating with the RLC layer of another NG-RAN (as described above in the context of figures 2 and 3).

Embodiments of the invention may involve one or more of the following procedures. In a first stage, the 5G system 100 and/or an entity thereof establishes two PDU sessions with the UE 101 for two redundant user plane data paths with the UE 101 for supporting the communication of two redundant URLLC endpoint user data streams, wherein one PDU session spans from the UE 101 via the Master NG-RAN 110 to the UPF1 150 of the core network 170, while the other PDU session spans from the UE 101 via the Secondary NG-RAN 120 to the UPF2 160 of the core network 170. In an embodiment, the master NG-RAN 110 may request from the secondary NG-RAN 120 to establish the at least one user plane data tunnel, i.e. the GTP-U tunnel 514 via the Xn interface for communicating URLLC endpoint user data packets, i.e. Ethernet frames or DetNet-IP packets, while requesting the secondary NG-RAN 120 for radio resources for the UE communications. After the secondary NG-RAN 120 has acknowledged the establishment, by using the at least one user plane data tunnel, i.e., the GTP-U tunnel 514, each NG-RAN110, 120 transfers URLLC endpoint user data packets, i.e. Ethernet frames or DetNet-IP packets, encapsulated in user plane data packets communicating in its own default PDU session for the UE 110, to the counterpart NG-RAN 120, 110. In an embodiment, the corresponding request message used by the Master NG-RAN 110 for establishing the at least one user plane data tunnel, i.e. the GTP-U tunnel 514 may include one or parameters, such as information about the tunnel 514 for receiving URLLC endpoint user data packets, i.e. Ethernet frames or DetNet-IP packets, encapsulated in the user plane data packets communicating in the secondary NG-RAN's default PDU session for the UE 110, and preference information of data flow direction (e.g., uplink or downlink).

If the secondary RAN 120 is able to support the functionality requested by the master NG-RAN 110, e.g., processing the received downlink and uplink URLLC endpoint user data streams communicating in the master NG-RAN's default PDU session for the UE 101, sending the corresponding downlink and uplink URLLC endpoint user data streams communicating in the secondary NG-RAN's PDU session for the UE 101, as well as having radio resources to support the communicate with the UE 101, the secondary NG-RAN 120 acknowledges the establishment of the user plane data tunnel in the Xn interface including to provide the tunnel information for receiving the downlink and uplink URLLC endpoint user data packets.

When each NG-RAN 110, 120 uses this user plane data tunnel, i.e., GTP-U tunnel 514 established via the Xn interface to transfer URLLC endpoint user frames, i.e. Ethernet frames or DetNet-IP packets to the other NG-RAN 120, 110, the corresponding functionality of the respective NG-RAN 110, 120 may include the capability as well as the necessary information for identifying the flowing direction of data streams, i.e., downlink or uplink. In an embodiment, this information may be provided in a header of the user plane tunnel data packet, i.e., GTP-U data packet, for instance, in the extension header of the user plane tunnel data packet, i.e. GTP-U packet.

As already described above, the Packet Duplication and Elimination (PDE) entities 512, 522 may be provided in the GTP-U 111, 121 and/or SDAP 113, 123 software module layer of the respective NG-RAN 110, 120 for identifying the duplication of downlink or uplink URLLC endpoint user data packets, i.e. Ethernet frames or DetNet-IP packets, which are transferred in user plane data flows of the PDU session established in each NG-RAN 110, 120 for the UE 101, and eliminating a duplicate copy, if necessary. An exemplary embodiment of the operation of the first and second PDE entity 512, 522 is illustrated in figure 6, which will be described in more detail further below.

The URLLC endpoint user data packet, i.e. Ethernet frame or DetNet-IP packet encapsulated 703 in the service data unit (SDU) of a data packet for each layer in the respective NG-RAN 110, 120 is shown in Figure 7. In an embodiment, the header information of an URLLC endpoint user data packet, i.e. Ethernet frame or DetNet-IP packet may include a sequence number and endpoint user data stream identifiers. For instance, in case of an Ethernet frame as payload, a set of Ethernet parameters of endpoint user data stream identifiers may be included, such as source and destination Ethernet MAC addresses, VLAN tag identifiers, Ethernet type and the like. In case of an DetNet-IP packet as payload, a set of IP flow parameters of the endpoint user data stream identifiers may be included, such as source and destination IP addresses, MPLS tag identifiers, next level protocol type, source and destination ports and the like.

As already described above, the first and second PDE entity 512, 522 of each NG-RAN 110, 120 obtains the URLLC endpoint user data packets, i.e. Ethernet frame or DetNet-IP packets and may extract the endpoint user data stream identifiers and the sequence number from the downlink data packet received from both the N3 interface (from the core network 170) and the Xn interface, as well as the uplink data packets received from both the radio interface (from the UE 101) and the Xn interface. In the normal case of no packet loss in the communication process, for a given data flow direction, i.e., downlink or uplink, the first and second PDE entity 512, 522 of each NG-RAN 110, 120 may be able to generate two Ethernet frames or DetNet-IP packets (each in one of the two redundant endpoint user data streams related to the same UE 101) with properties of the two sets of stream identifiers within a redundant pair of stream identifiers, same sequence number, and probably with the same sending time stamp, from two received data packets. As will be appreciated, this is because one of the two URLLC endpoint user data packets, i.e. Ethernet frames and/or DetNet-IP packets is provided by the other NG-RAN 110, 120 through the user plane data tunnel, i.e., GTP-U tunnel 514 via the Xn interface.

For each data flow direction, i.e. downlink or uplink, the respective first and second PDE entity 512, 522 of each NG-RAN 110, 120 extracts endpoint user data stream identifiers, the sequence number and the recorded previously received sequence numbers of the two redundant URLLC endpoint user data packets, i.e. Ethernet frames or DetNet-IP packets, and identifies whether the URLLC endpoint user data packet, i.e. Ethernet frame or DetNet-IP packet, has already been received (as can be taken from its sequence number and endpoint user data stream identifiers, which are encapsulated in the received data packet). If this is the case, i.e. the URLLC endpoint user data packet, i.e. Ethernet frame or DetNet-IP packet has already been received, the respective PDE entity 512, 522 may discard the duplicate data packet.

As already mentioned above, an exemplary more detailed embodiment of the operation of the first and second PDE entity 512, 522 is illustrated in figure 6, which comprises the following steps.

In step 601, the first or second PDE entity 512, 522 is configured to obtain the Ethernet frame or DetNet-IP packet.

In step 603, the first or second PDE entity 512, 522 is configured to extract the endpoint user data stream identifier set and the sequence number from the header of the Ethernet frame or DetNet-IP packet (the sequence number in DetNet layer for DetNet-IP packet).

In step 605, the first or second PDE entity 512, 522 is configured to verify whether the downlink or uplink endpoint user data stream identifier set (extracted in step 603) related with the two redundant PDU sessions of the UE 101 are already stored in a memory of the respective PDE entity 512, 522. If this is not the case, the first or second PDE entity 512, 522 is configured to store the downlink or uplink endpoint user data stream identifier set related with the two redundant PDU sessions of the UE 101 in its memory and to associate the sets of stream identifiers exacted from the downlink or uplink Ethernet frame or DetNet-IP packet streams which are encapsulated in data packet of the two redundant PDU sessions (i.e., the first PDU session and the second PDU session) respectively as a redundant pair of stream identifier sets (step 607 of figure 6).

In step 609, the first or second PDE entity 512, 522 is configured to verify whether the sequence number (extracted in step 603) of the endpoint user data stream related with the PDU session of the UE 101 is already stored in the memory of the respective PDE entity 512, 522, i.e., store the extracted sequence number into memory including associating the extracted sequence number with the redundant pair of stream identifier sets of the extracted set of stream identifiers if the extracted sequence number is not equal to any sequence number in memory associated with the redundant pair of stream identifier sets, wherein the extracted set of stream identifiers is one of the set of the redundant pair of stream identifier sets. If this is the case, i.e, if the extracted sequence number is equal to one of sequence numbers in memory associated with the redundant pair of stream identifier sets, wherein the extracted set of stream identifiers is one of the set of the redundant pair of stream identifier sets, the first or second PDE entity 512, 522 is configured to discard the Ethernet frame or DetNet-IP packet and abort the operations of generating a data packet encapsulating the Ethernet frame or DetNet-IP packet to provide for the other protocol layers of the protocol stack of the respective NG-RAN 110, 120 (step 611 of figure 6).

If the sequence number (extracted in step 603) is not stored in its memory, the first or second PDE entity 512, 522 is further configured to verify whether the corresponding received data packet has been received as part of the PDU session of the NG-RAN 110, 120 which the respective PDE entity 512, 522 is part of (step 613 of figure 6).

If it is determined in step 613 of figure 6 that the corresponding received data packet has not been received as part of the PDU session of the NG-RAN 110, 120 which the respective PDE entity 512, 522 belongs to (i.e., the corresponding received data packet is received from Xn interface), the first or second PDE entity 512, 522 is further configured in step 615 of figure 6 to replace the stream identifier set of the endpoint user data stream inside the data packet with the stream identifier set of its corresponding counterpart redundant endpoint user data stream (if existing). The first or second PDE entity 512, 522 is configured to continue processing by recording the sequence number in its memory associated with the endpoint user data stream and by providing the data packets to other protocol layers of the protocol stack of the respective NG-RAN 110, 120 (step 619 of figure 6).

If it is determined in step 613 of figure 6 that the corresponding data packet has been received as part of the PDU session of the NG-RAN 110, 120 the respective PDE entity 512, 522 belongs to, the first or second PDE entity 512, 522 is further configured in step 617 of figure 6 to use the obtained Ethernet frame or DetNet-IP packet as payload and the corresponding tunnel information for assembling a corresponding GTP-U packet 701 (as illustrated in figure 7) and to send the assembled GTP-U packet 701 via the Xn interface to the other NG-RAN. The first or second PDE entity 512, 522 is configured to continue processing by storing the sequence number in its memory including associating with the endpoint user data stream identifier set (see previous description of step 609) and by providing the data packets to other protocol layers of the protocol stack of the respective NG-RAN 110, 120 (step 619 of figure 6).

By establishing the at least one user plane data tunnel, i.e. GTP-U tunnel 514 via the Xn interface for mutually communicating URLLC endpoint user data stream encapsulated in the user plane data flow of the PDU session established in each NG-RAN 110, 120 for the UE 101, each NG-RAN 110, 120 receives two URLLC endpoint user data streams transferred by the user plane data flows of the two redundant PDU sessions. This allows preventing the single point of failure of the conventional solution described above.

Due to the functionality of the first and second PDE entity 512, 522 to identify duplication of downlink or uplink URLLC endpoint user data packets, i.e. Ethernet frames or IP DetNet-packets, and to eliminate duplicate packets, the availability and reliability of 5G communications can be improved. For instance, if one of two data packets of the two redundant PDU sessions is lost in radio communication, the respective first or second PDE entity 512, 522 can recover the lost packet smoothly by regenerating the lost data packet to communicate with the core network 170 and vice versa. Moreover, the end-to-end communication latency may be decreased. Furthermore, by including the information for identifying the data flow direction of the user data streams in the extended header of a PDU data packet transmitted via the Xn interface, the respective PDE entity 512, 522 advantageously can identify whether the data flow is a downlink data flow or an uplink data flow.

Figure 8 is a flow diagram illustrating a method 800 for providing redundant data paths for communication of data for the UE 110 in the 5G communication network 100. The method 800 comprises the steps of:
establishing 801 a first packet data unit, PDU session for the UE 101 using the primary NG-RAN 110 implementing a first protocol stack, wherein the first protocol stack includes at least one first GTP-U entity 111 and a first SDAP entity 113, wherein the establishment of the first PDU session includes establishing at least one first GTP-U tunnel between the core network 170 of the communication network 100 and the primary NG-RAN 110;
establishing 803 a second PDU session for the UE 101 using the secondary NG-RAN 120 implementing a second protocol stack, wherein the second protocol stack includes at least one second GTP-U entity 121 and a second SDAP entity 123, wherein the establishment of the second PDU session includes establishing at least one second GTP-U tunnel between the core network 170 of the communication network 100 and the secondary NG-RAN 120;
providing 805 a first PDE entity 512 in the first GTP-U entity 111 and/or the first SDAP entity 113 of the primary NG-RAN 110 and a second PDE entity 522 in the second GTP-U entity 121 and/or the second SDAP entity 123 of the secondary NG-RAN 120.

The method 800 further comprises the following steps performed by the first PDE entity 512:
obtaining 807 a first downlink Ethernet frame or DetNet-IP packet 703 from the first GTP-U entity 111;
generating 809 a first downlink service data unit, SDU, wherein the first downlink SDU comprises the first downlink Ethernet frame or DetNet-IP packet 703;
generating 811 a first downlink packet data unit, PDU, based on the first downlink SDU, wherein the first downlink PDU comprises the first downlink Ethernet frame or DetNet-IP DetNet-packet 703 for providing the first downlink PDU to the first SDAP entity 113 or a first packet data convergence protocol, PDCP, entity 115 of the primary NG-RAN 110; and
providing 813 a copy of the first downlink SDU to the first GTP-U entity 111 for forwarding the copy of the first downlink SDU to the secondary NG-RAN 120.

The method 800 may be performed by the network entity and/or the 5G communication network 100 described above. Thus, further features of the method 800 result directly from the functionality of the network entity and the 5G communication network as well as their different embodiments described above and below.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. A network entity for providing redundant data paths for communication of data for a user equipment, UE, (101) in a communication network (100), wherein the network entity is configured to:
establish a first packet data unit, PDU session for the UE (101) using a primary next generation radio access network, NG-RAN, (110) implementing a first protocol stack, wherein the first protocol stack includes at least one first GPRS tunnelling protocol user plane, GTP-U, entity (111) and a first service data adaption protocol, SDAP, entity (113), wherein the establishment of the first PDU session includes establishing at least one first GTP-U tunnel between a core network (170) of the communication network (100) and the primary NG-RAN (110);
establish a second PDU session for the UE (101) using a secondary NG-RAN (120) implementing a second protocol stack, wherein the second protocol stack includes at least one second GTP-U entity (121) and a second SDAP entity (123), wherein the establishment of the second PDU session includes establishing at least one second GTP-U tunnel between the core network (170) of the communication network (100) and the secondary NG-RAN (120); and
provide a first packet duplication and elimination, PDE, entity (512) in the first GTP-U entity (111) and/or the first SDAP entity (113) of the primary NG-RAN (110) and a second PDE entity (522) in the second GTP-U entity (121) and/or the second SDAP entity (123) of the secondary NG-RAN (120), wherein the first PDE entity (512) is configured to:
(a) obtain a first downlink Ethernet frame or DetNet-IP packet (703) from the first GTP-U entity (111);
(b) generate a first downlink service data unit, SDU, wherein the first downlink SDU comprises the first downlink Ethernet frame or DetNet-IP packet (703);
(c) generate a first downlink packet data unit, PDU, based on the first downlink SDU, wherein the first downlink PDU comprises the first downlink Ethernet frame or DetNet-IP packet (703) for providing the first downlink PDU to the first SDAP entity (113) or a first packet data convergence protocol, PDCP, entity (115) of the primary NG-RAN (110); and
(d) provide a copy of the first downlink SDU to the first GTP-U entity (111) or a further first GTP-U entity for forwarding the copy of the first downlink SDU to the secondary NG-RAN (120).

2. The network entity of claim 1, wherein the first GTP-U entity (111) is configured to extract the first downlink Ethernet frame or DetNet-IP packet from the payload of a first GPRS tunnelling protocol packet data unit, GTP PDU received by the primary NG-RAN (110) through the first GTP-U tunnel for obtaining the first downlink Ethernet frame or DetNet-IP packet by the first PDE entity (512).

3. The network entity of claim 1 or 2, wherein the network entity is configured to further establish at least one further GTP-U tunnel between the first GTP-U entity (111) or the further first GTP-U entity of the primary NG-RAN (110) and the second GTP-U entity (121) or a further second GTP-U entity of the secondary NG-RAN (120) for communicating user data related to the UE (101), wherein the first GTP-U entity (111) or the further first GTP-U entity (111) is configured to generate a GTP-U PDU based on the copy of the first downlink SDU for forwarding the GTP-U PDU to the second GTP-U entity (121) or the further second GTP-U entity of the secondary NG-RAN (120) through the at least one further GTP-U tunnel.

4. The network entity of any one of the preceding claims, wherein the first PDE entity (512) of the primary NG-RAN (110) is further configured to:
(a) obtain a first uplink Ethernet frame or DetNet-IP packet from a first PDCP entity (115);
(b) generate a first uplink service data unit, SDU, wherein the first uplink SDU comprises the first uplink Ethernet frame or DetNet-IP packet;
(c) generate a first uplink packet data unit, PDU, based on the first uplink SDU, wherein the first uplink PDU comprises the first uplink Ethernet frame or DetNet-IP packet for providing the first uplink PDU to the first GTP-U entity (111) for generating a GTP-U PDU to send to the core network (170) of the communication network (100) via the first GTP-U tunnel; and
(d) provide a copy of the first uplink SDU to the first GTP-U entity (111) or the further first GTP-U entity for forwarding the copy of the first uplink SDU to the secondary NG-RAN (120) via the at least one further GTP-U tunnel.

5. The network entity of claim 4, wherein the first PDE entity (512) is further configured to provide the copy of the first downlink SDU or the copy of the first uplink SDU to the first GTP-U entity (111) or the further first GTP-U entity together with information indicative of whether the respective Ethernet frame or DetNet-IP packet is intended for the UE (101) or the core network (170) of the communication network (100).

6. The network entity of claim 1, wherein the second PDE entity (522) of the secondary NG-RAN (120) is configured to:
(a) obtain a second downlink Ethernet frame or DetNet-IP packet (703) from the second GTP-U entity (121);
(b) generate a second downlink service data unit, SDU, wherein the second downlink SDU comprises the second downlink Ethernet frame or DetNet-IP packet (703);
(c) generate a second downlink packet data unit, PDU, based on the second downlink SDU, wherein the second downlink PDU comprises the second downlink Ethernet frame or DetNet-IP packet (703) for providing the second downlink PDU to the second SDAP entity (123) or a second packet data convergence protocol, PDCP, entity (125) of the secondary NG-RAN (120); and
(d) provide a copy of the second downlink SDU to the second GTP-U entity (121) or a further second GTP-U entity for forwarding the copy of the second downlink SDU to the primary NG-RAN (110) via the further GTP-U tunnel.

7. The network entity of claim 6, wherein the second PDE entity (522) of the secondary NG-RAN (120) is further configured to:
(a) obtain a second uplink Ethernet frame or DetNet-IP packet from the second PDCP entity (125);
(b) generate a second uplink service data unit, SDU, wherein the second uplink SDU comprises the second uplink Ethernet frame or DetNet-IP packet;
(c) generate a second uplink packet data unit, PDU, based on the second uplink SDU, wherein the second uplink PDU comprises the second uplink Ethernet frame or DetNet-IP packet for providing the second uplink PDU to the second GTP-U entity (121) for generating a GTP-U PDU to send to the core network (170) of the communication network (100) via the second GTP-U tunnel; and
(d) provide a copy of the second uplink SDU to the second GTP-U entity (121) or a further second GTP-U entity for forwarding the copy of the second uplink SDU to the primary NG-RAN (110) via the further GTP-U tunnel.

8. A communication network (100) for providing redundant data paths for communication of data for a user equipment, UE, (101), wherein the communication network (100) comprises:
a primary next generation radio access network, NG-RAN, (110) for establishing a first packet data unit, PDU session for the UE (101) using a first protocol stack, wherein the first protocol stack includes at least one first GPRS tunnelling protocol user plane, GTP-U, entity (111) and a first service data adaption protocol, SDAP, entity (113), wherein the first PDU session includes at least one first GTP-U tunnel between a core network (170) of the communication network (100) and the primary NG-RAN (110);
a secondary NG-RAN (120) for establishing a second PDU session for the UE (101) using a second protocol stack, wherein the second protocol stack includes at least one second GTP-U entity (121) and a second SDAP entity (123), wherein the second PDU session includes at least one second GTP-U tunnel between the core network (170) of the communication network (100) and the secondary NG-RAN (120); and
a first packet duplication and elimination, PDE, entity (512) in the first GTP-U entity (111) and/or the first SDAP entity (113) of the primary NG-RAN (110) and a second PDE entity (522) in the second GTP-U entity (121) and/or the second SDAP entity (123) of the secondary NG-RAN (120), wherein the first PDE entity (512) is configured to:
(a) obtain a first downlink Ethernet frame or DetNet-IP packet (703) from the first GTP-U entity (111);
(b) generate a first downlink service data unit, SDU, wherein the first downlink SDU comprises the first downlink Ethernet frame or DetNet-IP packet (703);
(c) generate a first downlink packet data unit, PDU, based on the first downlink SDU, wherein the first downlink PDU comprises the first downlink Ethernet frame or DetNet-IP packet (703) for providing the first downlink PDU to the first SDAP entity (113) or a first packet data convergence protocol, PDCP, entity (115) of the primary NG-RAN (110); and
(d) provide a copy of the first downlink SDU to the first GTP-U entity (111) or a further first GTP-U entity for forwarding the copy of the first downlink SDU to the secondary NG-RAN (120).

9. The communication network (100) of claim 8, wherein the first GTP-U entity (111) is configured to extract the first downlink Ethernet frame or DetNet-IP packet from the payload of a first GPRS tunnelling protocol packet data unit, GTP PDU received by the primary NG-RAN (110) through the first GTP-U tunnel for obtaining the first downlink Ethernet frame or DetNet-IP packet by the first PDE entity (512).

10. The communication network (100) of any one of claims 8 or 9, wherein the communication network (100) further comprises at least one further GTP-U tunnel between the first GTP-U entity (111) or the further first GTP-U entity of the primary NG-RAN (110) and the second GTP-U entity (121) or a further second GTP-U entity of the secondary NG-RAN (120) for communicating user data related to the UE (101), wherein the first GTP-U entity (111) or the further first GTP-U entity (111) is configured to generate a GTP-U PDU based on the copy of the first downlink SDU for forwarding the GTP-U PDU to the second GTP-U entity (121) or the further second GTP-U entity of the secondary NG-RAN (120) through the at least one further GTP-U tunnel.

11. The communication network (100) of any one of claims 8 to 10, wherein the first PDE entity (512) of the primary NG-RAN (110) is further configured to:
(a) obtain a first uplink Ethernet frame or DetNet-IP packet from a first PDCP entity (115);
(b) generate a first uplink service data unit, SDU, wherein the first uplink SDU comprises the first uplink Ethernet frame or DetNet-IP packet;
(c) generate a first uplink packet data unit, PDU, based on the first uplink SDU, wherein the first uplink PDU comprises the first uplink Ethernet frame or DetNet-IP packet for providing the first uplink PDU to the first GTP-U entity (111) for generating a GTP-U PDU to send to the core network (170) of the communication network (100) via the first GTP-U tunnel; and
(d) provide a copy of the first uplink SDU to the first GTP-U entity (111) or the further first GTP-U entity for forwarding the copy of the first uplink SDU to the secondary NG-RAN (120) via the at least one further GTP-U tunnel.

12. The communication network (100) of claim 11, wherein the first PDE entity (512) is further configured to provide the copy of the first downlink SDU or the copy of the first uplink SDU to the first GTP-U entity (111) or the further first GTP-U entity together with information indicative of whether the respective Ethernet frame or DetNet-IP packet is intended for the UE (101) or or the core network (170) of the communication network (100).

13. The communication network (100) of claim 8, wherein the second PDE entity (522) of the secondary NG-RAN (120) is configured to:
(a) obtain a second downlink Ethernet frame or DetNet-IP packet (703) from the second GTP-U entity (121);
(b) generate a second downlink service data unit, SDU, wherein the second downlink SDU comprises the second downlink Ethernet frame or DetNet-IP packet (703);
(c) generate a second downlink packet data unit, PDU, based on the second downlink SDU, wherein the second downlink PDU comprises the second downlink Ethernet frame or DetNet-IP packet (703) for providing the second downlink PDU to the second SDAP entity (123) or a second packet data convergence protocol, PDCP, entity (125) of the secondary NG-RAN (120); and
(d) provide a copy of the second downlink SDU to the second GTP-U entity (121) or a further second GTP-U entity for forwarding the copy of the second downlink SDU to the primary NG-RAN (110) via the further GTP-U tunnel.

14. A method (800) for providing redundant data paths for communication of data for a user equipment, UE, (101) in a communication network (100), wherein the method (800) comprises:
establishing (801) a first packet data unit, PDU session for the UE (101) using a primary next generation radio access network, NG-RAN, (110) implementing a first protocol stack, wherein the first protocol stack includes at least one first GPRS tunnelling protocol user plane, GTP-U, entity (111) and a first service data adaption protocol, SDAP, entity (113), wherein the establishment of the first PDU session includes establishing at least one first GTP-U tunnel between a core network (170) of the communication network (100) and the primary NG-RAN (110);
establishing (803) a second PDU session for the UE (101) using a secondary NG-RAN (120) implementing a second protocol stack, wherein the second protocol stack includes at least one second GTP-U entity (121) and a second SDAP entity (123), wherein the establishment of the second PDU session includes establishing at least one second GTP-U tunnel between the core network (170) of the communication network (100) and the secondary NG-RAN (120); and
providing (805) a first packet duplication and elimination, PDE, entity (512) in the first GTP-U entity (111) and/or the first SDAP entity (113) of the primary NG-RAN (110) and a second PDE entity (522) in the second GTP-U entity (121) and/or the second SDAP entity (123) of the secondary NG-RAN (120),
wherein the method (800) further comprises the following steps performed by the first PDE entity (512):
obtaining (807) a first downlink Ethernet frame or DetNet-IP packet (703) from the first GTP-U entity (111);
generating (809) a first downlink service data unit, SDU, wherein the first downlink SDU comprises the first downlink Ethernet frame or DetNet-IP packet (703);
generating (811) a first downlink packet data unit, PDU, based on the first downlink SDU, wherein the first downlink PDU comprises the first downlink Ethernet frame or DetNet-IP packet (703) for providing the first downlink PDU to the first SDAP entity (113) or a first packet data convergence protocol, PDCP, entity (115) of the primary NG-RAN (110); and
providing (813) a copy of the first downlink SDU to the first GTP-U entity (111) or a further first GTP-U entity for forwarding the copy of the first downlink SDU to the secondary NG-RAN (120).

15. A computer program product comprising a non-transitory computer-readable storage medium for storing program code which causes a computer or a processor to perform the method (800) of claim 14, when the program code is executed by the computer or the processor.

## Patentansprüche

1. Netzwerkentität zum Bereitstellen redundanter Datenpfade zur Datenkommunikation für ein Benutzergerät, UE, (101) in einem Kommunikationsnetzwerk (100), wobei die Netzwerkentität zu Folgendem konfiguriert ist:
Einrichten einer ersten Sitzung für eine Paketdateneinheit (PDU-Sitzung) für das UE (101) unter Verwendung eines primären Funkzugangsnetzwerks der nächsten Generation, NG-RAN, (110), das einen ersten Protokollstapel implementiert, wobei der erste Protokollstapel mindestens eine erste GPRS-Tunnelprotokoll-Benutzerebenenentität, GTP-U-Entität, (111) und eine erste Dienstdatenanpassungsprotokollentität, SDAP-Entität, (113) beinhaltet, wobei die Einrichtung der ersten PDU-Sitzung Einrichten mindestens eines ersten GTP-U-Tunnels zwischen einem Kernnetzwerk (170) des Kommunikationsnetzwerks (100) und dem primären NG-RAN (110) beinhaltet;
Einrichten einer zweiten PDU-Sitzung für das UE (101) unter Verwendung eines sekundären NG-RAN (120), das einen zweiten Protokollstapel implementiert, wobei der zweite Protokollstapel mindestens eine zweite GTP-U-Entität (121) und eine zweite SDAP-Entität (123) beinhaltet, wobei die Einrichtung der zweiten PDU-Sitzung Einrichten mindestens eines zweiten GTP-U-Tunnels zwischen dem Kernnetzwerk (170) des Kommunikationsnetzwerks (100) und dem sekundären NG-RAN (120) beinhaltet; und
Bereitstellen einer ersten Paketduplizierungs- und -eliminierungsentität, PDE-Entität, (512) in der ersten GTP-U-Entität (111) und/oder der ersten SDAP-Entität (113) des primären NG-RAN (110) und einer zweiten PDE-Entität (522) in der zweiten GTP-U-Entität (121) und/oder der zweiten SDAP-Entität (123) des sekundären NG-RAN (120), wobei die erste PDE-Entität (512) zu Folgendem konfiguriert ist:
(a) Erlangen eines ersten Downlink-Ethernet-Frames oder eines ersten DetNet-IP-Pakets (703) von der ersten GTP-U-Entität (111) ;
(b) Generieren einer ersten Downlink-Dienstdateneinheit, SDU, wobei die erste Downlink-SDU den ersten Downlink-Ethernet-Frame oder das erste DetNet-IP-Paket (703) umfasst;
(c) Generieren einer ersten Downlink-Paketdateneinheit, PDU, basierend auf der ersten Downlink-SDU, wobei die erste Downlink-PDU den ersten Downlink-Ethernet-Frame oder das erste DetNet-IP-Paket (703) umfasst, um der ersten SDAP-Entität (113) oder einer ersten Paketdatenkonvergenzprotokollentität, PDCP-Entität, (115) des primären NG-RAN (110) die erste Downlink-PDU bereitzustellen; und
(d) Bereitstellen einer Kopie der ersten Downlink-SDU an die erste GTP-U-Entität (111) oder eine weitere erste GTP-U-Entität zum Weiterleiten der Kopie der ersten Downlink-SDU an das sekundäre NG-RAN (120).

2. Netzwerkentität nach Anspruch 1, wobei die erste GTP-U-Entität (111) dazu konfiguriert ist, den ersten Downlink-Ethernet-Frame oder das erste DetNet-IP-Paket aus der Nutzlast einer ersten GPRS-Tunnelprotokoll-Paketdateneinheit, GTP-PDU, die durch das primäre NG-RAN (110) durch den ersten GTP-U-Tunnel empfangen wird, zu extrahieren, um den ersten Downlink-Ethernet-Frame oder das erste DetNet-IP-Paket durch die erste PDE-Entität (512) zu erlangen.

3. Netzwerkentität nach Anspruch 1 oder 2, wobei die Netzwerkentität dazu konfiguriert ist, ferner mindestens einen weiteren GTP-U-Tunnel zwischen der ersten GTP-U-Entität (111) oder der weiteren ersten GTP-U-Entität des primären NG-RAN (110) und der zweiten GTP-U-Entität (121) oder einer weiteren zweiten GTP-U-Entität des sekundären NG-RAN (120) einzurichten, um Benutzerdaten in Bezug auf das UE (101) kommunizieren, wobei die erste GTP-U-Entität (111) oder die weitere erste GTP-U-Entität (111) dazu konfiguriert ist, basierend auf der Kopie der ersten Downlink-SDU eine GTP-U-PDU zu generieren, um die GTP-U-PDU durch den mindestens einen weiteren GTP-U-Tunnel an die zweite GTP-U-Entität (121) oder die weitere zweite GTP-U-Entität des sekundären NG-RAN (120) weiterzuleiten.

4. Netzwerkentität nach einem der vorhergehenden Ansprüche, wobei die erste PDE-Entität (512) des primären NG-RAN (110) ferner zu Folgendem konfiguriert ist:
(a) Erlangen eines ersten Uplink-Ethernet-Frames oder eines ersten DetNet-IP-Pakets von der ersten PDCP-Entität (115);
(b) Generieren einer ersten Uplink-Dienstdateneinheit, SDU, wobei die erste Uplink-SDU den ersten Uplink-Ethernet-Frame oder das erste DetNet-IP-Paket umfasst;
(c) Generieren einer ersten Uplink-Paketdateneinheit, PDU, basierend auf der ersten Uplink-SDU, wobei die erste Uplink-PDU den ersten Uplink-Ethernet-Frame oder das erste DetNet-IP-Paket umfasst, um der ersten GTP-U-Entität (111) die erste Uplink-PDU bereitzustellen, um eine GTP-U-PDU zu generieren, die über den ersten GTP-U-Tunnel an das Kernnetzwerk (170) des Kommunikationsnetzwerks (100) zu senden ist; und
(d) Bereitstellen einer Kopie der ersten Uplink-SDU an die erste GTP-U-Entität (111) oder die weitere erste GTP-U-Entität, um die Kopie der ersten Uplink-SDU über den mindestens einen weiteren GTP-U-Tunnel an das sekundäre NG-RAN (120) weiterzuleiten.

5. Netzwerkentität nach Anspruch 4, wobei die erste PDE-Entität (512) ferner dazu konfiguriert ist, der ersten GTP-U-Entität (111) oder der weiteren ersten GTP-U-Entität die Kopie der ersten Downlink-SDU oder die Kopie der ersten Uplink-SDU zusammen mit Informationen, die angeben, ob der jeweilige Ethernet-Frame oder das jeweilige DetNet-IP-Paket für das UE (101) oder das Kernnetzwerk (170) des Kommunikationsnetzwerks (100) gedacht ist, bereitzustellen.

6. Netzwerkentität nach Anspruch 1, wobei die zweite PDE-Entität (522) des sekundären NG-RAN (120) zu Folgendem konfiguriert ist:
(a) Erlangen eines zweiten Downlink-Ethernet-Frames oder eines zweiten DetNet-IP-Pakets (703) von der zweiten GTP-U-Entität (121) ;
(b) Generieren einer zweiten Downlink-Dienstdateneinheit, SDU, wobei die zweite Downlink-SDU den zweiten Downlink-Ethernet-Frame oder das zweite DetNet-IP-Paket (703) umfasst;
(c) Generieren einer zweiten Downlink-Paketdateneinheit, PDU, basierend auf der zweiten Downlink-SDU, wobei die zweite Downlink-PDU den zweiten Downlink-Ethernet-Frame oder das zweite DetNet-IP-Paket (703) umfasst, um der zweiten SDAP-Entität (123) oder einer zweiten Paketdatenkonvergenzprotokollentität, PDCP-Entität, (125) des sekundären NG-RAN (120) die zweite Downlink-PDU bereitzustellen; und
(d) Bereitstellen einer Kopie der zweiten Downlink-SDU an die zweite GTP-U-Entität (121) oder eine weitere zweite GTP-U-Entität, um die Kopie der zweiten Downlink-SDU über den weiteren GTP-U-Tunnel an das primäre NG-RAN (110) weiterzuleiten.

7. Die Netzwerkentität nach Anspruch 6, wobei die zweite PDE-Entität (522) des sekundären NG-RAN (120) ferner zu Folgendem konfiguriert ist:
(a) Erlangen eines zweiten Uplink-Ethernet-Frames oder eines zweiten DetNet-IP-Pakets von der zweiten PDCP-Entität (125);
(b) Generieren einer zweiten Uplink-Dienstdateneinheit, SDU, wobei die zweite Uplink-SDU den zweiten Uplink-Ethernet-Frame oder das zweite DetNet-IP-Paket umfasst;
(c) Generieren einer zweiten Uplink-Paketdateneinheit, PDU, basierend auf der zweiten Uplink-SDU, wobei die zweite Uplink-PDU den zweiten Uplink-Ethernet-Frame oder das zweite DetNet-IP-Paket umfasst, um der zweiten GTP-U-Entität (121) die zweite Uplink-PDU bereitzustellen, um eine GTP-U-PDU zu generieren, die über den zweiten GTP-U-Tunnel an das Kernnetzwerk (170) des Kommunikationsnetzwerks (100) zu senden ist; und
(d) Bereitstellen einer Kopie der zweiten Uplink-SDU an die zweite GTP-U-Entität (121) oder eine weitere zweite GTP-U-Entität, um die Kopie der zweiten Uplink-SDU über den weiteren GTP-U-Tunnel an das primäre NG-RAN (110) weiterzuleiten.

8. Kommunikationsnetzwerk (100) zum Bereitstellen redundanter Datenpfade zur Datenkommunikation für ein Benutzergerät, UE, (101), wobei das Kommunikationsnetzwerk (100) Folgendes umfasst:
ein primäres Funkzugangsnetzwerk der nächsten Generation, NG-RAN, (110) zum Einrichten einer ersten Sitzung für eine Paketdateneinheit, PDU-Sitzung, für das UE (101) unter Verwendung eines ersten Protokollstapels, wobei der erste Protokollstapel mindestens eine erste GPRS-Tunnelprotokoll-Benutzerebenenentität, GTP-U-Entität, (111) und eine erste Dienstdatenanpassungsprotokollentität, SDAP-Entität, (113) beinhaltet, wobei die erste PDU-Sitzung mindestens einen ersten GTP-U-Tunnel zwischen einem Kernnetzwerk (170) des Kommunikationsnetzwerks (100) und dem primären NG-RAN (110) beinhaltet;
ein sekundäres NG-RAN (120) zum Einrichten einer zweiten PDU-Sitzung für das UE (101) unter Verwendung eines zweiten Protokollstapels, wobei der zweite Protokollstapel mindestens eine zweite GTP-U-Entität (121) und eine zweite SDAP-Entität (123) beinhaltet, wobei die zweite PDU-Sitzung mindestens einen zweiten GTP-U-Tunnel zwischen dem Kernnetzwerk (170) des Kommunikationsnetzwerks (100) und dem sekundären NG-RAN (120) beinhaltet; und
eine erste Paketduplizierungs- und -eliminierungsentität, PDE-Entität, (512) in der ersten GTP-U-Entität (111) und/oder der ersten SDAP-Entität (113) des primären NG-RAN (110) und einer zweiten PDE-Entität (522) in der zweiten GTP-U-Entität (121) und/oder der zweiten SDAP-Entität (123) des sekundären NG-RAN (120), wobei die erste PDE-Entität (512) zu Folgendem konfiguriert ist:
(a) Erlangen eines ersten Downlink-Ethernet-Frames oder eines ersten DetNet-IP-Pakets (703) von der ersten GTP-U-Entität (111) ;
(b) Generieren einer ersten Downlink-Dienstdateneinheit, SDU, wobei die erste Downlink-SDU den ersten Downlink-Ethernet-Frame oder das erste DetNet-IP-Paket (703) umfasst;
(c) Generieren einer ersten Downlink-Paketdateneinheit, PDU, basierend auf der ersten Downlink-SDU, wobei die erste Downlink-PDU den ersten Downlink-Ethernet-Frame oder das erste DetNet-IP-Paket (703) umfasst, um der ersten SDAP-Entität (113) oder einer ersten Paketdatenkonvergenzprotokollentität, PDCP-Entität, (115) des primären NG-RAN (110) die erste Downlink-PDU bereitzustellen; und
(d) Bereitstellen einer Kopie der ersten Downlink-SDU an die erste GTP-U-Entität (111) oder eine weitere erste GTP-U-Entität zum Weiterleiten der Kopie der ersten Downlink-SDU an das sekundäre NG-RAN (120).

9. Kommunikationsnetzwerk (100) nach Anspruch 8, wobei die erste GTP-U-Entität (111) dazu konfiguriert ist, den ersten Downlink-Ethernet-Frame oder das erste DetNet-IP-Paket aus der Nutzlast einer ersten GPRS-Tunnelprotokoll-Paketdateneinheit, GTP-PDU, die durch das primäre NG-RAN (110) durch den ersten GTP-U-Tunnel empfangen wird, zu extrahieren, um den ersten Downlink-Ethernet-Frame oder das erste DetNet-IP-Paket durch die erste PDE-Entität (512) zu erlangen.

10. Kommunikationsnetzwerk (100) nach einem der Ansprüche 8 oder 9, wobei das Kommunikationsnetzwerk (100) ferner mindestens einen weiteren GTP-U-Tunnel zwischen der ersten GTP-U-Entität (111) oder der weiteren ersten GTP-U-Entität des primären NG-RAN (110) und der zweiten GTP-U-Entität (121) oder einer weiteren zweiten GTP-U-Entität des sekundären NG-RAN (120) umfasst, um Benutzerdaten in Bezug auf das UE (101) kommunizieren, wobei die erste GTP-U-Entität (111) oder die weitere erste GTP-U-Entität (111) dazu konfiguriert ist, basierend auf der Kopie der ersten Downlink-SDU eine GTP-U-PDU zu generieren, um die GTP-U-PDU durch den mindestens einen weiteren GTP-U-Tunnel an die zweite GTP-U-Entität (121) oder die weitere zweite GTP-U-Entität des sekundären NG-RAN (120) weiterzuleiten.

11. Kommunikationsnetzwerk (100) nach einem der Ansprüche 8 bis 10, wobei die erste PDE-Entität (512) des primären NG-RAN (110) ferner zu Folgendem konfiguriert ist:
(a) Erlangen eines ersten Uplink-Ethernet-Frames oder eines ersten DetNet-IP-Pakets von der ersten PDCP-Entität (115);
(b) Generieren einer ersten Uplink-Dienstdateneinheit, SDU, wobei die erste Uplink-SDU den ersten Uplink-Ethernet-Frame oder das erste DetNet-IP-Paket umfasst;
(c) Generieren einer ersten Uplink-Paketdateneinheit, PDU, basierend auf der ersten Uplink-SDU, wobei die erste Uplink-PDU den ersten Uplink-Ethernet-Frame oder das erste DetNet-IP-Paket umfasst, um der ersten GTP-U-Entität (111) die erste Uplink-PDU bereitzustellen, um eine GTP-U-PDU zu generieren, die über den ersten GTP-U-Tunnel an das Kernnetzwerk (170) des Kommunikationsnetzwerks (100) zu senden ist; und
(d) Bereitstellen einer Kopie der ersten Uplink-SDU an die erste GTP-U-Entität (111) oder die weitere erste GTP-U-Entität, um die Kopie der ersten Uplink-SDU über den mindestens einen weiteren GTP-U-Tunnel an das sekundäre NG-RAN (120) weiterzuleiten.

12. Kommunikationsnetzwerk (100) nach Anspruch 11, wobei die erste PDE-Entität (512) ferner dazu konfiguriert ist, der ersten GTP-U-Entität (111) oder der weiteren ersten GTP-U-Entität die Kopie der ersten Downlink-SDU oder die Kopie der ersten Uplink-SDU zusammen mit Informationen, die angeben, ob der jeweilige Ethernet-Frame oder das jeweilige DetNet-IP-Paket für das UE (101) oder das Kernnetzwerk (170) des Kommunikationsnetzwerks (100) gedacht ist, bereitzustellen.

13. Kommunikationsnetzwerk (100) nach Anspruch 8, wobei die zweite PDE-Entität (522) des sekundären NG-RAN (120) zu Folgendem konfiguriert ist:
(a) Erlangen eines zweiten Downlink-Ethernet-Frames oder eines zweiten DetNet-IP-Pakets (703) von der zweiten GTP-U-Entität (121) ;
(b) Generieren einer zweiten Downlink-Dienstdateneinheit, SDU, wobei die zweite Downlink-SDU den zweiten Downlink-Ethernet-Frame oder das zweite DetNet-IP-Paket (703) umfasst;
(c) Generieren einer zweiten Downlink-Paketdateneinheit, PDU, basierend auf der zweiten Downlink-SDU, wobei die zweite Downlink-PDU den zweiten Downlink-Ethernet-Frame oder das zweite DetNet-IP-Paket (703) umfasst, um der zweiten SDAP-Entität (123) oder einer zweiten Paketdatenkonvergenzprotokollentität, PDCP-Entität, (125) des sekundären NG-RAN (120) die zweite Downlink-PDU bereitzustellen; und
(d) Bereitstellen einer Kopie der zweiten Downlink-SDU an die zweite GTP-U-Entität (121) oder eine weitere zweite GTP-U-Entität, um die Kopie der zweiten Downlink-SDU über den weiteren GTP-U-Tunnel an das primäre NG-RAN (110) weiterzuleiten.

14. Verfahren (800) zum Bereitstellen redundanter Datenpfade zur Datenkommunikation für ein Benutzergerät, UE, (101) in einem Kommunikationsnetzwerk (100), wobei das Verfahren (800) Folgendes umfasst:
Einrichten (801) einer ersten Sitzung für eine Paketdateneinheit (PDU-Sitzung) für das UE (101) unter Verwendung eines primären Funkzugangsnetzwerks der nächsten Generation, NG-RAN, (110), das einen ersten Protokollstapel implementiert, wobei der erste Protokollstapel mindestens eine erste GPRS-Tunnelprotokoll-Benutzerebenenentität, GTP-U-Entität, (111) und eine erste Dienstdatenanpassungsprotokollentität, SDAP-Entität, (113) beinhaltet, wobei die Einrichtung der ersten PDU-Sitzung Einrichten mindestens eines ersten GTP-U-Tunnels zwischen einem Kernnetzwerk (170) des Kommunikationsnetzwerks (100) und dem primären NG-RAN (110) beinhaltet;
Einrichten (803) einer zweiten PDU-Sitzung für das UE (101) unter Verwendung eines sekundären NG-RAN (120), das einen zweiten Protokollstapel implementiert, wobei der zweite Protokollstapel mindestens eine zweite GTP-U-Entität (121) und eine zweite SDAP-Entität (123) beinhaltet, wobei die Einrichtung der zweiten PDU-Sitzung Einrichten mindestens eines zweiten GTP-U-Tunnels zwischen dem Kernnetzwerk (170) des Kommunikationsnetzwerks (100) und dem sekundären NG-RAN (120) beinhaltet; und
Bereitstellen (805) einer ersten Paketduplizierungs- und - eliminierungsentität, PDE-Entität, (512) in der ersten GTP-U-Entität (111) und/oder der ersten SDAP-Entität (113) des primären NG-RAN (110) und einer zweiten PDE-Entität (522) in der zweiten GTP-U-Entität (121) und/oder der zweiten SDAP-Entität (123) des sekundären NG-RAN (120),
wobei das Verfahren (800) ferner die folgenden durch die erste PDE-Entität (512) ausgeführten Schritte umfasst:
Erlangen (807) eines ersten Downlink-Ethernet-Frames oder eines ersten DetNet-IP-Pakets (703) von der ersten GTP-U-Entität (111);
Generieren (809) einer ersten Downlink-Dienstdateneinheit, SDU, wobei die erste Downlink-SDU den ersten Downlink-Ethernet-Frame oder das erste DetNet-IP-Paket (703) umfasst;
Generieren (811) einer ersten Downlink-Paketdateneinheit, PDU, basierend auf der ersten Downlink-SDU, wobei die erste Downlink-PDU den ersten Downlink-Ethernet-Frame oder das erste DetNet-IP-Paket (703) umfasst, um der ersten SDAP-Entität (113) oder einer ersten Paketdatenkonvergenzprotokollentität, PDCP-Entität, (115) des primären NG-RAN (110) die erste Downlink-PDU bereitzustellen; und
Bereitstellen (813) einer Kopie der ersten Downlink-SDU an die erste GTP-U-Entität (111) oder eine weitere erste GTP-U-Entität zum Weiterleiten der Kopie der ersten Downlink-SDU an das sekundäre NG-RAN (120).

15. Computerprogrammprodukt, das ein nicht transitorisches computerlesbares Speichermedium zum Speichern von Programmcode umfasst, der einen Computer oder einen Prozessor dazu veranlasst, das Verfahren (800) von Anspruch 14 auszuführen, wenn der Programmcode durch den Computer oder den Prozessor ausgeführt wird.

## Revendications

1. Entité de réseau destinée à fournir des chemins de données redondants pour une communication de données pour un équipement utilisateur, UE, (101) dans un réseau de communication (100), dans laquelle l'entité de réseau est configurée pour :
établir une première session d'unité de données par paquets, PDU, pour l'UE (101) à l'aide d'un réseau d'accès radio de nouvelle génération, NG-RAN, primaire (110) mettant en œuvre une première pile de protocoles, dans laquelle la première pile de protocoles comporte au moins une première entité de plan utilisateur de protocole de tunnelisation GPRS, GTP-U, (111) et une première entité de protocole d'adaptation de données de service, SDAP (113), dans laquelle l'établissement de la première session PDU comporte l'établissement d'au moins un premier tunnel GTP-U entre un réseau central (170) du réseau de communication (100) et le NG-RAN primaire (110) ;
établir une seconde session PDU pour l'UE (101) à l'aide d'un NG-RAN secondaire (120) mettant en œuvre une seconde pile de protocoles, dans laquelle la seconde pile de protocoles comporte au moins une seconde entité GTP-U (121) et une seconde entité SDAP (123), dans laquelle l'établissement de la seconde session PDU comporte l'établissement d'au moins un second tunnel GTP-U entre le réseau central (170) du réseau de communication (100) et le NG-RAN secondaire (120) ; et
fournir une première entité de duplication et d'élimination de paquets, PDE, (512) dans la première entité GTP-U (111) et/ou la première entité SDAP (113) du NG-RAN primaire (110) et une seconde entité PDE (522) dans la seconde entité GTP-U (121) et/ou la seconde entité SDAP (123) du NG-RAN secondaire (120), dans laquelle la première entité PDE (512) est configurée pour :
(a) obtenir une première trame Ethernet de liaison descendante ou un premier paquet DetNet-IP (703) à partir de la première entité GTP-U (111) ;
(b) générer une première unité de données de service, SDU, de liaison descendante, dans laquelle la première SDU de liaison descendante comprend la première trame Ethernet de liaison descendante ou le premier paquet DetNet-IP (703) ;
(c) générer une première unité de données par paquets, PDU, de liaison descendante, sur la base de la première SDU de liaison descendante, dans laquelle la première PDU de liaison descendante comprend la première trame Ethernet de liaison descendante ou le premier paquet DetNet-IP (703) pour fournir la première PDU de liaison descendante à la première entité SDAP (113) ou une première entité de protocole de convergence de données par paquets, PDCP (115) du NG-RAN primaire (110) ; et
(d) fournir une copie de la première SDU de liaison descendante à la première entité GTP-U (111) ou à une autre première entité GTP-U pour transmettre la copie de la première SDU de liaison descendante au NG-RAN secondaire (120).

2. Entité de réseau selon la revendication 1, dans laquelle la première entité GTP-U (111) est configurée pour extraire la première trame Ethernet de liaison descendante ou le premier paquet DetNet-IP de la charge utile d'une première unité de données par paquets de protocole de tunnelisation GPRS, PDU GTP, reçu par le NG-RAN primaire (110) à travers le premier tunnel GTP-U pour obtenir la première trame Ethernet de liaison descendante ou le premier paquet DetNet-IP par la première entité PDE (512).

3. Entité de réseau selon la revendication 1 ou 2, dans laquelle l'entité de réseau est configurée pour établir également au moins un autre tunnel GTP-U entre la première entité GTP-U (111) ou l'autre première entité GTP-U du NG-RAN primaire (110) et la seconde entité GTP-U (121) ou une autre seconde entité GTP-U du NG-RAN secondaire (120) pour communiquer des données utilisateur liées à l'UE (101), dans laquelle la première entité GTP-U (111) ou l'autre première entité GTP-U (111) est configurée pour générer une PDU GTP-U sur la base de la copie de la première SDU de liaison descendante pour transmettre la PDU GTP-U à la seconde entité GTP-U (121) ou à l'autre seconde entité GTP-U du NG-RAN secondaire (120) à travers au moins un autre tunnel GTP-U.

4. Entité de réseau selon l'une quelconque des revendications précédentes, dans laquelle la première entité PDE (512) du NG-RAN primaire (110) est également configurée pour :
(a) obtenir une première trame Ethernet de liaison montante ou un premier paquet DetNet-IP à partir d'une première entité PDCP (115) ;
(b) générer une première unité de données de service, SDU, de liaison montante, dans laquelle la première SDU de liaison montante comprend la première trame Ethernet de liaison montante ou le premier paquet DetNet-IP ;
(c) générer une première unité de données par paquets de liaison montante, PDU, sur la base de la première SDU de liaison montante, dans laquelle la première PDU de liaison montante comprend la première trame Ethernet de liaison montante ou le premier paquet DetNet-IP pour fournir la première PDU de liaison montante à la première entité GTP-U (111) pour générer une PDU GTP-U à envoyer au réseau central (170) du réseau de communication (100) via le premier tunnel GTP-U ; et
(d) fournir une copie de la première SDU de liaison montante à la première entité GTP-U (111) ou à l'autre première entité GTP-U pour transmettre la copie de la première SDU de liaison montante au NG-RAN secondaire (120) via l'au moins un autre tunnel GTP-U.

5. Entité de réseau selon la revendication 4, dans laquelle la première entité PDE (512) est également configurée pour fournir la copie de la première SDU de liaison descendante ou la copie de la première SDU de liaison montante à la première entité GTP-U (111) ou à l'autre première entité GTP-U ainsi que des informations indiquant si la trame Ethernet ou le paquet DetNet-IP respectif est destiné à l'UE (101) ou au réseau central (170) du réseau de communication (100).

6. Entité de réseau selon la revendication 1, dans laquelle la seconde entité PDE (522) du NG-RAN secondaire (120) est configurée pour :
(a) obtenir une seconde trame Ethernet de liaison descendante ou un second paquet DetNet-IP (703) de la seconde entité GTP-U (121) ;
(b) générer une seconde unité de données de service, SDU, de liaison descendante, dans laquelle la seconde SDU de liaison descendante comprend la seconde trame Ethernet de liaison descendante ou le second paquet DetNet-IP (703) ;
(c) générer une seconde unité de données par paquets, PDU, de liaison descendante, sur la base de la seconde SDU de liaison descendante, dans laquelle la seconde PDU de liaison descendante comprend la seconde trame Ethernet de liaison descendante ou le second paquet DetNet-IP (703) pour fournir la seconde PDU de liaison descendante à la seconde entité SDAP (123) ou une seconde entité de protocole de convergence de données par paquets, PDCP (125) du NG-RAN secondaire (120) ; et
(d) fournir une copie de la seconde SDU de liaison descendante à la seconde entité GTP-U (121) ou à une autre seconde entité GTP-U pour transmettre la copie de la seconde SDU de liaison descendante au NG-RAN primaire (110) via l'autre tunnel GTP-U.

7. Entité de réseau selon la revendication 6, dans laquelle la seconde entité PDE (522) du NG-RAN secondaire (120) est également configurée pour :
(a) obtenir une seconde trame Ethernet de liaison montante ou un second paquet DetNet-IP de la seconde entité PDCP (125) ;
(b) générer une seconde unité de données de service, SDU, de liaison montante, dans laquelle la seconde SDU de liaison montante comprend la seconde trame Ethernet de liaison montante ou le second paquet DetNet-IP ;
(c) générer une seconde unité de données par paquets, PDU, de liaison montante, sur la base de la seconde SDU de liaison montante, dans laquelle la seconde PDU de liaison montante comprend la seconde trame Ethernet de liaison montante ou le second paquet DetNet-IP pour fournir la seconde PDU de liaison montante à la seconde entité GTP-U (121) pour générer une PDU GTP-U à envoyer au réseau central (170) du réseau de communication (100) via le second tunnel GTP-U ; et
(d) fournir une copie de la seconde SDU de liaison montante à la seconde entité GTP-U (121) ou à une autre seconde entité GTP-U pour transmettre la copie de la seconde SDU de liaison montante au NG-RAN primaire (110) via l'autre tunnel GTP-U.

8. Réseau de communication (100) pour fournir des chemins de données redondants pour une communication de données pour un équipement utilisateur, UE, (101), dans lequel le réseau de communication (100) comprend :
un réseau d'accès radio de nouvelle génération, NG-RAN, primaire (110) pour établir une première session d'unité de données par paquets, PDU, pour l'UE (101) à l'aide une première pile de protocoles, dans lequel la première pile de protocoles comporte au moins une première entité de plan utilisateur de protocole de tunnelisation GPRS, GTP-U, (111) et une première entité de protocole d'adaptation de données de service, SDAP (113), dans lequel la première session PDU comporte au moins un premier tunnel GTP-U entre un réseau central (170) du réseau de communication (100) et le NG-RAN primaire (110) ;
un NG-RAN secondaire (120) pour établir une seconde session PDU pour l'UE (101) à l'aide d'une seconde pile de protocoles, dans lequel la seconde pile de protocoles comporte au moins une seconde entité GTP-U (121) et une seconde entité SDAP (123), dans lequel la seconde session PDU comporte au moins un second tunnel GTP-U entre le réseau central (170) du réseau de communication (100) et le NG-RAN secondaire (120) ; et
une première entité de duplication et d'élimination de paquets, PDE, (512) dans la première entité GTP-U (111) et/ou la première entité SDAP (113) du NG-RAN primaire (110) et une seconde entité PDE (522) dans la seconde entité GTP-U (121) et/ou la seconde entité SDAP (123) du NG-RAN secondaire (120), dans lequel la première entité PDE (512) est configurée pour :
(a) obtenir une première trame Ethernet de liaison descendante ou un premier paquet DetNet-IP (703) à partir de la première entité GTP-U (111) ;
(b) générer une première unité de données de service, SDU, de liaison descendante, dans lequel la première SDU de liaison descendante comprend la première trame Ethernet de liaison descendante ou le premier paquet DetNet-IP (703) ;
(c) générer une première unité de données par paquets, PDU, de liaison descendante, sur la base de la première SDU de liaison descendante, dans lequel la première PDU de liaison descendante comprend la première trame Ethernet de liaison descendante ou le premier paquet DetNet-IP (703) pour fournir la première PDU de liaison descendante à la première entité SDAP (113) ou une première entité de protocole de convergence de données par paquets, PDCP (115) du NG-RAN primaire (110) ; et
(d) fournir une copie de la première SDU de liaison descendante à la première entité GTP-U (111) ou à une autre première entité GTP-U pour transmettre la copie de la première SDU de liaison descendante au NG-RAN secondaire (120).

9. Réseau de communication (100) selon la revendication 8, dans lequel la première entité GTP-U (111) est configurée pour extraire la première trame Ethernet de liaison descendante ou le premier paquet DetNet-IP de la charge utile d'une première unité de données par paquets de protocole de tunnelisation GPRS, PDU GTP, reçu par le NG-RAN primaire (110) à travers le premier tunnel GTP-U pour obtenir la première trame Ethernet de liaison descendante ou le premier paquet DetNet-IP par la première entité PDE (512).

10. Réseau de communication (100) selon l'une quelconque des revendications 8 ou 9, dans lequel le réseau de communication (100) comprend également au moins un autre tunnel GTP-U entre la première entité GTP-U (111) ou l'autre première entité GTP-U du NG-RAN primaire (110) et la seconde entité GTP-U (121) ou une autre seconde entité GTP-U du NG-RAN secondaire (120) pour communiquer des données utilisateur liées à l'UE (101), dans lequel la première entité GTP-U (111) ou l'autre première entité GTP-U (111) est configurée pour générer une PDU GTP-U sur la base de la copie de la première SDU de liaison descendante pour transmettre la PDU GTP-U à la seconde entité GTP-U (121) ou à l'autre seconde entité GTP-U du NG-RAN secondaire (120) à travers au moins un autre tunnel GTP-U.

11. Réseau de communication (100) selon l'une quelconque des revendications 8 à 10, dans lequel la première entité PDE (512) du NG-RAN primaire (110) est également configurée pour :
(a) obtenir une première trame Ethernet de liaison montante ou un premier paquet DetNet-IP à partir d'une première entité PDCP (115) ;
(b) générer une première unité de données de service, SDU, de liaison montante, dans lequel la première SDU de liaison montante comprend la première trame Ethernet de liaison montante ou le premier paquet DetNet-IP ;
(c) générer une première unité de données par paquets, PDU, de liaison montante, sur la base de la première SDU de liaison montante, dans lequel la première PDU de liaison montante comprend la première trame Ethernet de liaison montante ou le premier paquet DetNet-IP pour fournir la première PDU de liaison montante à la première entité GTP-U (111) pour générer une PDU GTP-U à envoyer au réseau central (170) du réseau de communication (100) via le premier tunnel GTP-U ; et
(d) fournir une copie de la première SDU de liaison montante à la première entité GTP-U (111) ou à l'autre première entité GTP-U pour transmettre la copie de la première SDU de liaison montante au NG-RAN secondaire (120) via l'au moins un autre tunnel GTP-U.

12. Réseau de communication (100) selon la revendication 11, dans lequel la première entité PDE (512) est également configurée pour fournir la copie de la première SDU de liaison descendante ou la copie de la première SDU de liaison montante à la première entité GTP-U (111) ou à l'autre première entité GTP-U ainsi que des informations indiquant si la trame Ethernet ou le paquet DetNet-IP respectif est destiné à l'UE (101) ou au réseau central (170) du réseau de communication (100).

13. Réseau de communication (100) selon la revendication 8, dans lequel la seconde entité PDE (522) du NG-RAN secondaire (120) est configurée pour :
(a) obtenir une seconde trame Ethernet de liaison descendante ou un second paquet DetNet-IP (703) de la seconde entité GTP-U (121) ;
(b) générer une seconde unité de données de service, SDU, de liaison descendante, dans lequel la seconde SDU de liaison descendante comprend la seconde trame Ethernet de liaison descendante ou le second paquet DetNet-IP (703) ;
(c) générer une seconde unité de données par paquets, PDU, de liaison descendante, sur la base de la seconde SDU de liaison descendante, dans lequel la seconde PDU de liaison descendante comprend la seconde trame Ethernet de liaison descendante ou le second paquet DetNet-IP (703) pour fournir la seconde PDU de liaison descendante à la seconde entité SDAP (123) ou une seconde entité de protocole de convergence de données par paquets, PDCP (125) du NG-RAN secondaire (120) ; et
(d) fournir une copie de la seconde SDU de liaison descendante à la seconde entité GTP-U (121) ou à une autre seconde entité GTP-U pour transmettre la copie de la seconde SDU de liaison descendante au NG-RAN primaire (110) via l'autre tunnel GTP-U.

14. Procédé (800) pour fournir des chemins de données redondants pour une communication de données pour un équipement utilisateur, UE, (101) dans un réseau de communication (100), dans lequel le procédé (800) comprend :
l'établissement (801) d'une première session d'unité de données par paquets, PDU, pour l'UE (101) à l'aide d'un réseau d'accès radio de nouvelle génération, NG-RAN, primaire (110) mettant en oeuvre une première pile de protocoles, dans lequel la première pile de protocoles comporte au moins une première entité de plan utilisateur de protocole de tunnelisation GPRS, GTP-U, (111) et une première entité de protocole d'adaptation de données de service, SDAP (113), dans lequel l'établissement de la première session PDU comporte l'établissement d'au moins un premier tunnel GTP-U entre un réseau central (170) du réseau de communication (100) et le NG-RAN primaire (110) ;
l'établissement (803) d'une seconde session PDU pour l'UE (101) à l'aide d'un NG-RAN secondaire (120) mettant en oeuvre une seconde pile de protocoles, dans lequel la seconde pile de protocoles comporte au moins une seconde entité GTP-U (121) et une seconde entité SDAP (123), dans lequel l'établissement de la seconde session PDU comporte l'établissement d'au moins un second tunnel GTP-U entre le réseau central (170) du réseau de communication (100) et le NG-RAN secondaire (120) ; et
la fourniture (805) d'une première entité de duplication et d'élimination de paquets, PDE, (512) dans la première entité GTP-U (111) et/ou la première entité SDAP (113) du NG-RAN primaire (110) et une seconde entité PDE (522) dans la seconde entité GTP-U (121) et/ou la seconde entité SDAP (123) du NG-RAN secondaire (120),
dans lequel le procédé (800) comprend également les étapes suivantes exécutées par la première entité PDE (512) :
l'obtention (807) d'une première trame Ethernet de liaison descendante ou d'un premier paquet DetNet-IP (703) à partir de la première entité GTP-U (111) ;
la génération (809) d'une première unité de données de service, SDU, de liaison descendante, dans lequel la première SDU de liaison descendante comprend la première trame Ethernet de liaison descendante ou le premier paquet DetNet-IP (703) ;
la génération (811) d'une première unité de données par paquets, PDU, de liaison descendante, sur la base de la première SDU de liaison descendante, dans lequel la première PDU de liaison descendante comprend la première trame Ethernet de liaison descendante ou le premier paquet DetNet-IP (703) pour fournir la première PDU de liaison descendante à la première entité SDAP (113) ou une première entité de protocole de convergence de données par paquets, PDCP (115) du NG-RAN primaire (110) ; et
la fourniture (813) d'une copie de la première SDU de liaison descendante à la première entité GTP-U (111) ou à une autre première entité GTP-U pour transmettre la copie de la première SDU de liaison descendante au NG-RAN secondaire (120).

15. Produit de programme informatique comprenant un support de stockage non transitoire lisible par ordinateur pour stocker un code de programme qui amène un ordinateur ou un processeur à exécuter le procédé (800) selon la revendication 14, lorsque le code de programme est exécuté par l'ordinateur ou le processeur.
